# EUROPÄISCHE PATENTANMELDUNG

(11) **EP 3 981 497 A1**
(43) Veröffentlichungstag der Anmeldung: **13.04.2022**
(21) Anmeldenummer: 21201446.8
(22) Anmeldetag: 07.10.2021
(51) Int. Cl.: B01D 47/02, F24F 6/16

(54) **AUFBEREITUNGSVORRICHTUNG, AUFBEREITUNGSSYSTEM UND VERFAHREN ZU EINEM ABSCHEIDEN VON PARTIKELN AUS EINEM GASFÖRMIGEN MEDIUM**

(30) Priorität: 07.10.2020 DE 102020126181
(71) Anmelder: Bomat Heiztechnik GmbH, 88662 Überlingen (DE)
(72) Erfinder: Rolf, Bommer, 88662 Überlingen (DE); Meister, Gerhard, 88690 Uhldingen-Mühlhofen (DE)
(74) Vertreter: Daub, Thomas

(57) **Zusammenfassung**

Die Erfindung geht aus von einer Aufbereitungsvorrichtung zu einem Abscheiden von Partikeln aus einem gasförmigen Medium (12a), mit zumindest einer Rotationseinheit (14a; 14b) und mit zumindest einer Montageeinheit (16a; 16b) zu einer um eine Drehachse (18a; 18b) drehbaren Anordnung der Rotationseinheit (14a; 14b) innerhalb des gasförmigen Mediums (12a), wobei die Rotationseinheit (14a; 14b) zumindest ein Rotationselement (20a; 20b) und einen Flüssigkeitsauslass (22a, 24a, 26a; 22b, 24b) zu einem Benetzen einer Oberfläche des Rotationselements (20a; 20b) mit einer Flüssigkeit (28a) umfasst.

Es wird vorgeschlagen, dass der Flüssigkeitsauslass (22a, 24a, 26a; 22b, 24b) an dem Rotationselement (20a; 20b) angeordnet ist und/oder das Rotationselement (20a; 20b) zumindest eine Leitungsstruktur (30a; 30b) umfasst, welche zumindest einen Teilabschnitt einer Flüssigkeitsleitung (32a; 32b) zu dem Flüssigkeitsauslass (22a, 24a, 26a; 22b, 24b) bildet, der zumindest im Wesentlichen parallel zu der Drehachse (18a; 18b) verläuft.

## Beschreibung

Die Erfindung betrifft eine Aufbereitungsvorrichtung, ein Aufbereitungssystem und ein Verfahren zu einem Abscheiden von Partikeln aus einem gasförmigen Medium.

In CN 2397989 Y ist bereits eine Aufbereitungsvorrichtung zu einem Abscheiden von Partikeln aus einem gasförmigen Medium vorgeschlagen worden. Diese Aufbereitungsvorrichtung umfasst zumindest eine Rotationseinheit und zumindest eine Montageeinheit zu einer um eine Drehachse drehbaren Anordnung der Rotationseinheit innerhalb des gasförmigen Mediums. Die Rotationseinheit umfasst zumindest ein Rotationselement und einen Flüssigkeitsauslass zu einem Benetzen einer Oberfläche des Rotationselements mit einer Flüssigkeit.

Die Aufgabe der Erfindung besteht insbesondere darin, eine gattungsgemäße Vorrichtung, ein gattungsgemäßes System und ein gattungsgemäßes Verfahren mit verbesserten Eigenschaften hinsichtlich einer Effektivität des Abscheidens, einer Energieeffizienz und/oder einem Wartungsaufwand bereitzustellen. Die Aufgabe wird erfindungsgemäß durch die Merkmale der Ansprüche 1, 9 und 16 gelöst, während vorteilhafte Ausgestaltungen und Weiterbildungen der Erfindung den Unteransprüchen entnommen werden können.

### Vorteile der Erfindung

Die Erfindung geht aus von einer Aufbereitungsvorrichtung zu einem Abscheiden von Partikeln aus einem gasförmigen Medium, welche zumindest eine Rotationseinheit und zumindest eine Montageeinheit zu einer um eine Drehachse drehbaren Anordnung der Rotationseinheit innerhalb des gasförmigen Mediums umfasst, wobei die Rotationseinheit zumindest ein Rotationselement und einen Flüssigkeitsauslass zu einem Benetzen einer Oberfläche des Rotationselements mit einer Flüssigkeit umfasst.

Es wird vorgeschlagen, dass der Flüssigkeitsauslass an dem Rotationselement angeordnet ist und/oder das Rotationselement zumindest eine Leitungsstruktur umfasst, welche zumindest einen Teilabschnitt einer Flüssigkeitsleitung zu einem Flüssigkeitsauslass bildet, die zumindest im Wesentlichen parallel zu der Drehachse verläuft. Das gasförmige Medium ist insbesondere ein Gas, das feste und/oder flüssige Bestandteile mit sich führt, d.h. insbesondere Rauch, Dampf und/oder ein Gemisch daraus. Insbesondere ist das gasförmige Medium ein Abgas. Die Aufbereitungsvorrichtung ist insbesondere dazu vorgesehen, Partikel wie Ruß aus einem Abgas abzuscheiden. Beispielsweise ist das Abgas bei einem thermischen Umsetzungsprozess, beispielsweise einer Verbrennung von Holz, Hackschnitzeln, Pellets, Öl, Gas oder einem anderen, insbesondere kohlenstoffhaltigen, Brennmaterial, entstanden. Insbesondere ist die Aufbereitungsvorrichtung dazu vorgesehen, in einer Abgasleitung einer Verbrennungsvorrichtung angeordnet zu werden, insbesondere um einen Schadstoffausstoß der Verbrennungsvorrichtung unterhalb eines, insbesondere gesetzlich vorgegebenen, Grenzwerts zu halten. Beispielsweise ist die Aufbereitungsvorrichtung für als Heizung, als Blockkraftheizwerk oder als Feuerstätten ausgebildete Verbrennungsvorrichtung vorgesehen, wie beispielsweise für einen Raumheizer gemäß DIN EN 13240, für eine Speichereinzelfeuerstätte gemäß DIN EN 15250/A1, für einen Kamineinsatz gemäß DIN EN 13229, für einen Kachelofeneinsatz gemäß DIN 13229/A1 und/oder für einen Pelletofen gemäß DIN EN 14785. Unter "vorgesehen" soll insbesondere speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Rotationseinheit ist insbesondere dazu vorgesehen, in einer zur Drehachse senkrechten Drehebene von dem gasförmigen Medium umströmt und/oder durchströmt zu werden. Insbesondere ist die Rotationseinheit dazu vorgesehen, eine Durchmischung der Flüssigkeit und des gasförmigen Mediums durchzuführen. Die Flüssigkeit ist bevorzugt als Wasser oder als ein anderer Wärmeträger ausgebildet. Vorzugsweise umfasst die Rotationseinheit mehrere weitere Rotationselemente, welche insbesondere zueinander drehfest angeordnet sind und insbesondere zu einer gemeinsamen Drehung mit dem Rotationselement um dieselbe Drehachse vorgesehen sind. Die Rotationseinheit weist vorzugsweise eine maximale Längserstreckung auf, welche zumindest im Wesentlichen parallel zur Drehachse verläuft und sich insbesondere über mehrere der Rotationselemente hinweg erstreckt. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Eine maximale Querstreckung, insbesondere ein Außendurchmesser, der Rotationseinheit, welche insbesondere senkrecht zu der maximalen Längserstreckung und insbesondere zumindest im Wesentlichen senkrecht zur Drehachse verläuft, ist vorzugsweise durch eine maximale Querstreckung, insbesondere durch einen Außendurchmesser, des Rotationselements und/oder der weiteren Rotationselemente gegeben. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise ist die maximale Längserstreckung größer als die maximale Quererstreckung der Rotationseinheit. Alternativ ist die maximale Querstreckung der Rotationseinheit gleich groß oder größer als die maximale Längserstreckung der Rotationseinheit. Vorzugsweise umfasst die Rotationseinheit zumindest einen Flüssigkeitseinlass, welcher über zumindest eine Flüssigkeitsleitung strömungstechnisch mit dem Flüssigkeitsauslass verbunden ist. Die Drehachse verläuft vorzugsweise durch den Flüssigkeitseinlass hindurch. Vorzugsweise verläuft die Flüssigkeitsleitung entlang der Drehachse. Alternativ verläuft die Flüssigkeitsleitung beabstandet von der Drehachse, wobei die Rotationseinheit zumindest ein als Verteiler ausgebildetes Rotationselement aufweist, welches einen von der Drehachse zu der Flüssigkeitsleitung führenden Verteilungskanal aufweist. Die Flüssigkeitsleitung verläuft bevorzugt zumindest im Wesentlichen parallel zur Drehachse. Alternativ verläuft die Flüssigkeitsleitung unter einem Winkel, von insbesondere größer als oder gleich 8°, zu der Drehachse und/oder ist um die Drehachse herum gewunden angeordnet.

Die Montageeinheit umfasst vorzugsweise zumindest einen Drehlagereinsatz, welcher zu einer Lagerung in einem Drehlager ausgebildet ist. Vorzugsweise ist der Drehlagereinsatz als Einzellager ausgebildet, welches an einem Ende der Rotationseinheit entlang der Drehachse angeordnet ist. Vorzugsweise umfasst die Montageeinheit zumindest einen als Einzellager ausgebildeten weiteren Drehlagereinsatz, welcher entlang der Drehachse beabstandet von dem Drehlagereinsatz angeordnet ist. Alternativ sind der Drehlagereinsatz und der weitere Drehlagereinsatz als durchgehende Antriebswelle ausgebildet, welche durch die Rotationseinheit hindurch angeordnet ist. Optional umfasst die Montageeinheit ein Drehlager zur Aufnahme des Drehlagereinsatzes und ein Halteelement zu einer Ausrichtung des Drehlagers und der Drehachse, insbesondere relativ zu einer Strömungsrichtung des gasförmigen Mediums und/oder relativ zur Schwerkraft. Insbesondere ist das Drehlager dazu vorgesehen, die Drehachse zumindest während eines Betriebs der Aufbereitungsvorrichtung zumindest im Wesentlichen parallel zur Horizontalen auszurichten. Vorzugsweise umfasst die Montageeinheit zumindest ein Fixierelement zu einer Fixierung der Rotationselemente relativ zueinander und/oder relativ zu dem Drehlagereinsatz. Das Fixierelement ist beispielsweise als Haltestange, insbesondere als Gewindestange, ausgebildet, welche zumindest im Wesentlichen parallel zur Drehachse durch die Rotationseinheit hindurchgreift. Alternativ ist das Fixierelement als Gestell oder Klemme ausgebildet, welche/s die Rotationseinheit zumindest im Wesentlichen parallel zur Drehachse von außen umgreift. Vorzugsweise ist das Fixierelement beabstandet von der Drehachse angeordnet. Alternativ ist das Fixierelement einteilig mit dem, insbesondere als Antriebswelle ausgebildeten, Drehlagereinsatz ausgebildet. Vorzugsweise umfasst die Montageeinheit zumindest einen Flüssigkeitsanschluss zu einem Einspeisen der Flüssigkeit in die Rotationseinheit, insbesondere an dem Flüssigkeitseinlass. Vorzugsweise weist der Flüssigkeitsanschluss eine Schlauchtülle, einen Gewindekuppler, einen Schnellkuppler, einen Flansch oder dergleichen zum Anschluss einer externen Flüssigkeitsquelle auf. Der Flüssigkeitsanschluss ist insbesondere an der Rotationseinheit drehbar angeordnet. Insbesondere greift der Flüssigkeitsanschluss in den Flüssigkeitseinlass hinein und/oder umgreift den Flüssigkeitseinlass. Insbesondere ist in einer vorteilhaft kompakten Ausgestaltung das Drehlager in dem Flüssigkeitsanschluss eingelassen oder wird von dem Flüssigkeitsanschluss gebildet.

Vorzugsweise weist das Rotationselement einen Hauptkörper auf, welcher insbesondere zumindest 50 %, bevorzugt mehr als 75 %, eines Gesamtvolumens des Rotationselements umfasst. Vorzugsweise gibt der Hauptkörper in einer zur Drehachse senkrechten Ebene die maximale Quererstreckung, insbesondere den maximalen Durchmesser, des Rotationselements vor. Eine Außenkontur des Hauptkörpers in einer zur Drehachse senkrechten Ebene ist vorzugweise drehsymmetrisch, insbesondere kreisförmig. Besonders bevorzugt ist der Flüssigkeitsauslass in das Rotationselement eingelassen, insbesondere als Kanalstruktur auf einer Oberfläche des Hauptkörpers ausgebildet. Alternativ ist der Flüssigkeitsauslass oder ein zusätzlicher Flüssigkeitsauslass in einen Abschnitt einer Wandung der Flüssigkeitsleitung eingelassen, welcher an das Rotationselement, insbesondere den Hauptkörper, angrenzt. Alternativ, insbesondere bei einer vorgesehenen Ausrichtung der Drehachse an der Vertikalen, ist der Flüssigkeitsauslass oder ein zusätzlicher Flüssigkeitsauslass am vom Flüssigkeitseinlass abgewandten, insbesondere oberen, Ende der Flüssigkeitsleitung angeordnet.

Vorzugsweise begrenzt die Leitungsstruktur eine Ausnehmung des Rotationselements, welche insbesondere den Hauptkörper zumindest im Wesentlichen parallel zur Drehachse durchgreift. Alternativ ist die Flüssigkeitsleitung als von dem Rotationselement separates Bauteil ausgebildet und in der Ausnehmung angeordnet. Besonders bevorzugt verläuft die Drehachse durch die Ausnehmung, insbesondere schnittpunktfrei mit dem Rotationselement, hindurch. Vorzugsweise ist der Flüssigkeitsauslass als eine von der Ausnehmung ausgehende, von der Drehachse, insbesondere zumindest im Wesentlichen senkrecht, wegführende Kanalstruktur in dem Hauptkörper ausgebildet. Besonders bevorzugt weist das Rotationselement mehrere, insbesondere baugleiche, Flüssigkeitsauslässe auf, welche vorzugsweise drehsymmetrisch um die Ausnehmung herum angeordnet sind. Die Leitungsstruktur umfasst vorzugsweise eine aus dem Hauptkörper des Rotationselements in Richtung der Drehachse hinausragende, den Teilabschnitt des Flüssigkeitskanals verlängernde Leitungswand. Vorzugsweise überdeckt die Leitungswand der Leitungsstruktur die Flüssigkeitsauslässe teilweise. Insbesondere ist eine maximale Erstreckung des Flüssigkeitsauslasses in einer zur Drehachse senkrechten Ebene größer als eine maximale Erstreckung der Leitungswand in derselben Richtung wie die maximale Erstreckung des Flüssigkeitsauslasses.

Durch die erfindungsgemäße Ausgestaltung kann die Flüssigkeit vorteilhaft gezielt zu dem Rotationselement geführt werden. Insbesondere kann auf eine spezielle Ausrichtung des Flüssigkeitsauslasses auf das Rotationselement verzichtet werden. Insbesondere kann eine vorteilhaft kompakte Aufbereitungsvorrichtung zur Verfügung gestellt werden. Insbesondere kann eine vorteilhaft große Menge an Flüssigkeit über das Rotationselement verteilt werden. Ferner kann ein vorteilhaft hoher Wärmeübertrag von dem gasförmigen Medium auf die Flüssigkeit erreicht werden. Insbesondere kann Feuchtigkeit in dem gasförmigen Medium vorteilhaft auskondensiert werden, insbesondere auch bei einem pH-Wert des gasförmigen Mediums unter 3. Insbesondere kann ein vorteilhaft hoher Anteil an organischen und/oder anorganischen Partikeln in dem gasförmigen Medium auf die Flüssigkeit übertragen werden. Insbesondere kann ein Schwermetallabtrag vorteilhaft gering gehalten werden.

Weiter wird vorgeschlagen, dass das Rotationselement einen, insbesondere den bereits genannten, scheibenförmigen Hauptkörper mit zwei zumindest im Wesentlichen parallel verlaufenden Hauptaußenflächen umfasst, wobei der Flüssigkeitsauslass in zumindest einer der Hauptaußenflächen mündet. Insbesondere ist der Hauptkörper des Rotationselements scheibenförmig. Insbesondere sind die Hauptaußenflächen des Rotationselements Oberflächen des Hauptkörpers. Besonders bevorzugt sind die Hauptaußenflächen zumindest im Wesentlichen senkrecht zur Drehachse angeordnet. Besonders bevorzugt umfassen die beiden Hauptaußenflächen zusammen zumindest 25 %, bevorzugt zumindest 50 %, besonders bevorzugt zumindest 75 % einer Gesamtoberfläche des Rotationselements. Vorzugsweise ist eine Materialstärke des Hauptkörpers, welche durch einen maximalen Abstand zwischen den Hauptaußenflächen gegeben ist, zumindest zehnmal, vorzugsweise zumindest fünfzigmal, besonders bevorzugt mehr als hundertmal kleiner als die maximale Querstreckung des Rotationselements, insbesondere des Hauptkörpers. Eine Höhe von auf dem Hauptkörper, insbesondere von auf den Hauptaußenflächen, angeordneten Strukturelementen des Rotationselements, wie beispielsweise der Kanalwand, ist insbesondere kleiner als das Fünfzigfache, vorzugsweise kleiner als das Zehnfache, besonders bevorzugt kleiner als das Fünffache, der Materialstärke des Hauptkörpers. Die Höhe von auf dem Hauptkörper, insbesondere von auf den Hauptaußenflächen, angeordneten Strukturelementen des Rotationselements, wie beispielsweise der Kanalwand, ist insbesondere größer als die Hälfte, bevorzugt größer als das Einfache, besonders bevorzugt größer als das Doppelte, der Materialstärke des Hauptkörpers. Unter einer "Höhe" eines Strukturelements soll insbesondere eine maximale Erstreckung des Strukturelements verstanden werden, welche von der Hauptaußenfläche, auf der das Strukturelement angeordnet ist, in einer zu dieser Hauptaußenfläche senkrechten Richtung gemessen wird. Alternativ ist das Rotationselement als mit Füllkörpern gefüllte Trommel ausgebildet, deren Drehachse insbesondere parallel zu einer Hauptströmungsrichtung des gasförmigen Mediums ausgerichtet ist.. Durch die erfindungsgemäße Ausgestaltung kann eine vorteilhaft große effektive Kontaktfläche zwischen dem gasförmigen Medium und der Flüssigkeit erreicht werden. Insbesondere kann eine vorteilhaft flächige Verteilung der Flüssigkeit, insbesondere als durchgängiger Wasserfilm, erreicht werden.

Weiter wird vorgeschlagen, dass das Rotationselement aus einem Kunststoff gefertigt ist. Vorzugsweise ist das Rotationselement aus einem technischen Kunststoff oder einem Hochleistungskunststoff gefertigt. In einer vorteilhaft kostengünstigen Ausgestaltung ist das Rotationselement vorzugsweise aus Polyethylenterephthalat (PET) gefertigt. In einer Ausgestaltung mit einem vorteilhaft breiten Anwendungsbereich, insbesondere bezogen auf eine Temperatur des gasförmigen Mediums, ist das Rotationselement beispielsweise aus Polyphenylensulfid (PPS) gefertigt. Alternativ ist das Rotationselement aus einem Metall oder einer Metalllegierung gefertigt. Durch die erfindungsgemäße Ausgestaltung kann eine vorteilhaft kostengünstige und vorteilhaft gewichtsarme Aufbereitungsvorrichtung bereitgestellt werden. Ferner wird vorgeschlagen, dass eine, insbesondere die bereits genannte, Leitungswand der Leitungsstruktur eine Antriebswelle zu einem Antrieb der Rotationseinheit aufnimmt und/oder bildet. Vorzugsweise umfasst die Leitungswand zumindest eine Ausnehmung als Fixieraufnahme zu einer Aufnahme des Fixierelements. Insbesondere ist das Fixierelement als Antriebswelle ausgebildet. Das Fixierelement ist vorzugsweise an einem Getriebeelement, insbesondere einem Zahnrad, der Montageeinheit befestigt. Insbesondere ist das Fixierelement bei einem Antrieb des Getriebeelements dazu vorgesehen ein Drehmoment auf die Rotationseinheit zu übertragen. Besonders bevorzugt umfasst die Montageeinheit zumindest zwei, insbesondere drei, oder mehr baugleiche Fixierelemente, welche bezogen auf die Drehachse drehsymmetrisch in der Leitungswand angeordnet sind. Vorzugsweise ist das Fixierelement als von der Rotationseinheit separates Bauteil, insbesondere als Metallstange, ausgebildet. Alternativ oder zusätzlich ist ein als Verbindungselement ausgebildetes Fixierelement einstückig mit der Leitungswand ausgebildet. Beispielsweise umfasst die Leitungsstruktur ein Steckelement, insbesondere einen aus der Leitungswand herausragenden Stift, Noppen oder Steg, welches in einem als komplementäres Aufnahmeelement ausgebildeten weiteren Verbindungselement eines der weiteren Rotationselemente oder des Getriebeelements anordenbar ist. Optional ist ein Aufnahmeelement des Rotationselements für ein Verbindungselement einer der weiteren Rotationselemente und das Verbindungselement der Rotationseinheit auf einer senkrecht zur Drehachse verlaufenden Kreisbahn versetzt zueinander angeordnet, insbesondere sodass die Rotationselemente bei einer Anordnung des Verbindungselements an dem weiteren Verbindungselement um die Drehachse verdreht zueinander angeordnet sind. Vorzugsweise weist das Rotationselement mehrere Verbindungselemente auf, die insbesondere drehsymmetrisch bezüglich der Drehachse angeordnet sind. Optional sind zumindest zwei der mehreren Verbindungselemente und entsprechend zwei der komplementären weiteren Verbindungselemente verschiedenförmig ausgebildet, insbesondere sodass die Rotationselemente nur in einer Rotationsposition relativ zueinander aneinander anordenbar sind. Durch die erfindungsgemäße Ausgestaltung kann die Aufbereitungsvorrichtung vorteilhaft kompakt ausgestaltet werden. Insbesondere kann auf eine separat ausgebildete, zentrale Antriebswelle verzichtet werden und die Leitungsstruktur kann zentral, insbesondere entlang der Drehachse, angeordnet werden, wodurch insbesondere ein vorteilhaft einfacher Leitungsverlauf für die Flüssigkeitsleitung möglich ist. Insbesondere kann ein Druckverlust für die Flüssigkeit über die Flüssigkeitsleitung hinweg vorteilhaft klein gehalten werden.

Darüber hinaus wird vorgeschlagen, dass die Montageeinheit ein, insbesondere das bereits genannte, mit dem Rotationselement drehfest verbundenes Getriebeelement zu einem Antrieb der Rotationseinheit umfasst, wobei das Getriebeelement und ein, insbesondere der bereits genannte, den Flüssigkeitsauslass versorgender Flüssigkeitsanschluss entlang der Drehachse auf verschiedenen Seiten der Rotationseinheit angeordnet sind. Das Getriebeelement ist vorzugsweise als Zahnrad ausgebildet. Insbesondere ist das Fixierelement an dem Getriebeelement befestigt. Durch die erfindungsgemäße Ausgestaltung kann die Aufbereitungsvorrichtung vorteilhaft einfach, insbesondere in vorteilhaft wenigen Einzelschritten, ausgetauscht werden.

Weiterhin wird vorgeschlagen, dass das Rotationselement Umlenkelemente zu einer Verteilung der Flüssigkeit aufweist, welche beidseitig an einem scheibenförmigen Hauptkörper des Rotationselements angeordnet sind. Die Umlenkelemente sind beispielsweise als Noppen, Stifte, Stege, Rampen, Lamellen oder dergleichen ausgebildete Strukturelemente, welche auf den Hauptaußenflächen des Hauptkörpers angeordnet sind. Besonders bevorzugt weist das Umlenkelement an einer der Hauptaußenflächen eine aus dem Hauptkörper hinausragende Positivform auf und an der anderen Hauptaußenfläche eine zu der Positivform entsprechende Negativform, welche in den Hauptkörper hineinragt. Die Umlenkelemente können in den Hauptkörper eingepresst sein, auf den Hauptkörper mit einem additiven Verfahren stoffschlüssig aufgebracht sein und/oder in einem Guss mit dem Hauptkörper hergestellt sein. Vorzugsweise umfasst das Rotationselement eine Vielzahl an Umlenkelementen, insbesondere mehr als zehn, bevorzugt mehr als zwanzig, besonders bevorzugt mehr vierzig Umlenkelemente. Die Umlenkelemente sind in zumindest zwei verschiedenen Umlenkgruppen auf dem Grundkörper angeordnet, welche sich durch den Abstand zur Drehachse voneinander unterscheiden. Die Umlenkelemente zumindest zweier unterschiedlicher, insbesondere direkt benachbarter, Umlenkgruppen sind vorzugsweise senkrecht zu einem von der Drehachse ausgehenden und parallel zu den Hauptaußenflächen verlaufenden Strahl versetzt gegeneinander angeordnet. Die Umlenkelemente können die gleiche Höhe wie die Kanalwand aufweisen oder flacher als diese ausgebildet sein. Vorzugsweise sind die Umlenkelemente innerhalb der gleichen Umlenkgruppe bezüglich der Drehachse drehsymmetrisch angeordnet. Bevorzugt weisen die Anzahl an Umlenkelementen innerhalb einer Drehgruppe und die Anzahl an Fixierelementen einen kleinsten gemeinsamen Teiler größer 1 auf, bevorzugt größer 2, insbesondere gleich 3. Besonders bevorzugt sind je ein Umlenkelement des Rotationselements und des weiteren Rotationselements, insbesondere jedes Umlenkelements, entlang einer zur Drehachse zumindest im Wesentlichen parallelen Geraden angeordnet. Vorzugsweise sind jeweils eine Positivform und eine Negativform der Umlenkelemente direkt benachbarter Rotationselemente einander zugewandt angeordnet, so dass sie einen Kanal bilden und insbesondere ein minimaler Abstand zwischen benachbarten Rotationselementen auch über die Umlenkelemente hinweg zumindest im Wesentlichen konstant ist. Durch die erfindungsgemäße Ausgestaltung kann eine vorteilhaft große effektive Kontaktfläche zwischen der Flüssigkeit und dem gasförmigen Medium erreicht werden. Weiter kann eine vorteilhaft gleichmäßige Verteilung der Flüssigkeit und des gasförmigen Mediums über das gesamte Rotationselement erreicht werden. Insbesondere kann eine vorteilhaft große Verwirbelung der Flüssigkeit mit dem gasförmigen Medium erreicht werden. Weiter kann ein Bewegungsspielraum parallel zur Drehachse zwischen benachbarten Rotationselementen vorteilhaft eingeschränkt werden. Insbesondere kann eine vorteilhaft stabile Rotationseinheit erreicht werden.

Ferner wird vorgeschlagen, dass die Rotationseinheit zumindest ein, insbesondere baugleiches, weiteres Rotationselement aufweist, welches entlang der Drehachse mit dem Rotationselement aneinander gestapelt angeordnet ist. Unter "baugleich" soll insbesondere bis auf eine fertigungsbedingte Abweichung gleich verstanden werden. In einer alternativen Ausgestaltung weist die Rotationseinheit Rotationselemente mit verschiedenen Geometrien auf, insbesondere mit unterschiedlichen Strukturelementen und/oder mit unterschiedlicher Anordnung der Strukturelemente, wobei die Hauptkörper der Rotationselemente vorzugsweise die gleiche Außenkontur in einer zur Drehachse senkrechten Ebene aufweisen. Vorzugsweise umfasst die Rotationseinheit zumindest mehr als fünf Rotationselemente, insbesondere mehr als zehn Rotationselemente, besonders bevorzugt mehr als 40 Rotationselemente. Eine Anzahl an Rotationselementen kann anwendungsabhängig variiert werden. Die Rotationselemente sind vorzugsweise, insbesondere mittels der Montageeinheit, kraft- und/oder formschlüssig aneinander befestigt. Vorzugsweise stehen die Rotationselemente in direktem Kontakt miteinander. Insbesondere ist die Kanalwand der Kanalstruktur des Rotationselements an einer Hauptaußenfläche des weiteren Rotationselements angeordnet. Insbesondere ist eine Kanalwand einer Kanalstruktur eines zusätzlichen Rotationselements an einer Hauptaußenfläche des Rotationselements angeordnet. Insbesondere wird der Flüssigkeitskanal durch eine Aneinanderreihung der Kanalstrukturen der Rotationselemente gebildet. Vorzugsweise weist das Rotationselement als Stabilisierungselemente ausgebildete Strukturelemente, insbesondere Stege, Stifte oder Noppen auf, welche an zumindest einer Hauptaußenfläche angeordnet sind. Die Stabilisierungselemente weisen vorzugsweise die gleiche Höhe wie die Kanalwand auf. Vorzugsweise ist zumindest eines der Stabilisierungselemente an einem Außenrand einer der Hauptaußenflächen angeordnet, insbesondere weiter von der Drehachse entfernt als die Umlenkelemente. Optional weist das Rotationselement weitere Stabilisierungselemente auf, die zwischen den Umlenkelementen angeordnet sind. Vorzugsweise sind die Stabilisierungselemente drehsymmetrisch bezüglich der Drehachse angeordnet. Die Stabilisierungselemente sind insbesondere zu einem Kontakt mit einer der Hauptaußenflächen des weiteren Rotationselements vorgesehen. Insbesondere sind die Stabilisierungselemente dazu vorgesehen, einen Bewegungsspielraum der Hauptkörper der Rotationselemente in einer zur Drehachse parallelen Richtung zu beschränken und insbesondere einen direkten Kontakt der Hauptkörper zu vermeiden. Vorzugsweise nehmen die Stabilisierungselemente von der Drehachse aus betrachtet jeweils einen Sehwinkel von weniger als 10°, bevorzugt von weniger als 5°, besonders bevorzugt von weniger als 3° ein. Insbesondere weist eine Entfernung zwischen zwei direkt benachbarten Stabilisierungselementen von der Drehachse aus betrachtet einen Sehwinkel von zumindest 15°, bevorzugt von zumindest 30°, besonders bevorzugt von mehr als 55°, auf. Bevorzugt weist die Entfernung zwischen zwei direkt benachbarten Stabilisierungselementen von der Drehachse aus betrachtet einen Sehwinkel von höchstens 125°, bevorzugt von weniger als 95°, besonders bevorzugt von mehr als 65°, auf. Vorzugsweise ist eine Höhe der Stabilisierungselemente und/oder der Leitungswand anwendungsabhängig derart gewählt, dass sich, insbesondere bei einer passiven Führung des gasförmigen Mediums durch die Aufbereitungsvorrichtung, beispielsweise mittels Konvektion, mittels eines Kamins oder dergleichen, ein Druckverlust über die Rotationseinheit für das gasförmige Medium von weniger als 10 mBar, insbesondere weniger als 5 mBar, vorzugsweise weniger als 1 mBar, bevorzugt weniger als 0,5 mBar, besonders bevorzugt weniger als 0,3 mBar, ergibt. Bei einer Beaufschlagung des gasförmigen Mediums mit einem zusätzlichen Druck, insbesondere mittels eines Ventilators und/oder eines Kompressors, kann eine Höhe der Stabilisierungselemente und/oder Leitungswand derart gering gewählt werden, insbesondere die Rotationselemente derart dicht gestapelt werden, dass der Druckverlust über die Rotationseinheit 10 mBar übersteigt. Insbesondere ist die Höhe der Stabilisierungselemente und/oder der Leitungswand abhängig von Temperatur, Dichte, Massenstrom oder dergleichen des gasförmigen Mediums ausgelegt. Durch die erfindungsgemäße Ausgestaltung kann die Rotationseinheit mittels der Anzahl an verwendeten Rotationselementen vorteilhaft an eine Leistung der Verbrennungsvorrichtung angepasst werden. Ferner kann vorteilhaft ein Zwischenraum zwischen zwei Rotationselementen vorteilhaft klein gehalten werden. Insbesondere kann das gasförmige Medium auf vorteilhaft viele und vorteilhaft kleinteilige Flüssigkeitsfilme aufgeteilt werden. Insbesondere können flüssigkeitsarme Gasphasen innerhalb des gasförmigen Mediums vorteilhaft klein gehalten werden. Insbesondere kann eine vorteilhaft gute Vermischung des gasförmigen Mediums und der Flüssigkeit erreicht werden.

Weiterhin wird vorgeschlagen, dass die Rotationseinheit zumindest ein Abstandshalterelement umfasst, welches entlang der Drehachse zwischen dem Rotationselement und dem weiteren Rotationselement angeordnet ist und einen Teilabschnitt der Flüssigkeitsleitung bildet. Insbesondere ist das Abstandshalterelement auf die Kanalwand des Rotationselements aufgesetzt. Besonders bevorzugt umfasst die Rotationseinheit eine Vielzahl an Abstandshalterelemente, insbesondere zwischen je zwei Rotationselementen ein Abstandshalterelement. Alternativ weist die Rotationseinheit weniger Abstandshalterelemente als Rotationselemente auf, wobei die Abstandshalterelemente vorzugsweise in regelmäßigen Abständen entlang der Drehachse angeordnet sind, beispielsweise nach jedem zweiten Rotationselement, nach jedem dritten Rotationselement, nach jedem vierten Rotationselement oder dergleichen. Bevorzugt ist das Abstandshalterelement zumindest im Wesentlichen als separat ausgebildetes Duplikat der Kanalwand der Kanalstruktur ausgebildet. Alternativ sind die Rotationselemente der Rotationseinheit mittels der Abstandshalterelemente in Endbereichen der Rotationseinheit entlang der Drehachse dichter gestapelt als in einem Mittenbereich der Rotationseinheit, welcher zwischen den Endbereichen angeordnet ist, oder umgekehrt. Das Abstandshalterelement weist in einer zur Drehachse senkrechten Ebene vorzugsweise die gleiche den Flüssigkeitskanal begrenzende Innenkontur und insbesondere die gleiche Außenkontur auf wie die Kanalwand. Alternativ umgreift das Abstandshalterelement die Kanalwand des Rotationselements in einer zur Drehachse senkrechten Ebene oder weist eine andere, dem Fachmann als sinnvoll erscheinende Außenkontur auf. Insbesondere umfasst das Abstandhalterelement zumindest eine Fixieraufnahme, vorzugsweise gleich viele Fixieraufnahmen wie die Kanalstruktur, welche relativ zur Drehachse an den gleichen Positionen wie die Fixieraufnahmen der Kanalstruktur angeordnet ist/sind. Eine maximale Erstreckung des Abstandshalterelements kann der Höhe der Kanalwand entsprechen, kleiner oder größer sein. Beispielsweise ist ein Verhältnis der maximalen Erstreckung des Abstandshalterelements relativ zu der Höhe der Kanalwand größer als 0,5, bevorzugt größer als 1, insbesondere größer als 1,5. Vorzugsweise ist ein Verhältnis der maximalen Erstreckung des Abstandshalterelements relativ zu der Höhe der Kanalwand kleiner als 5, insbesondere kleiner als 3, bevorzugt kleiner als 2. Vorzugsweise liegt die Höhe der Kanalwand zwischen 1 mm und 10 mm, insbesondere zwischen 2 und 5 mm, besonders bevorzugt zwischen 2,5 mm und 3,5 mm. Vorzugsweise weist der Abstandshalter zumindest ein Verbindungselement und ein komplementäres weiteres Verbindungselement auf, welche gleich geformt sind wie das Verbindungselement bzw. das weitere Verbindungselement des Rotationselements. Besonders bevorzugt sind das Verbindungselement und das weitere Verbindungselement des Abstandshalters, insbesondere im Gegensatz zum Rotationselement, entlang einer zur Drehachse parallelen Geraden angeordnet. Insbesondere verlängert das Verbindungselement des Abstandshalters das Verbindungselement des Rotationselements entlang der zur Drehachse parallelen Geraden. Durch die erfindungsgemäße Ausgestaltung kann vorteilhaft ein Abstand zwischen den Rotationselementen anwendungsabhängig angepasst werden. Insbesondere kann ein Druckverlust des gasförmigen Mediums beim Durchqueren der Aufbereitungsvorrichtung anwendungsabhängig eingestellt werden. Insbesondere kann das Rotationselement vorteilhaft ohne Designanpassungen in vorteilhaft vielen Anwendungen zum Einsatz kommen. Insbesondere können Rüstkosten vorteilhaft gering gehalten werden.

Des Weiteren wird ein Aufbereitungssystem zu einem Abscheiden von Partikeln aus einem gasförmigen Medium vorgeschlagen, das zumindest eine erfindungsgemäße Aufbereitungsvorrichtung umfasst und welches zumindest einen Gaseinlass für das mit den Partikeln versetzte gasförmige Medium, zumindest einem Gasauslass für das gasförmige Medium in einem aufbereiteten Zustand, und zumindest eine Aufbereitungsleitung, welche den Gaseinlass mit dem Gasauslass strömungstechnisch verbindet, umfasst, wobei die Aufbereitungsvorrichtung im Inneren der Aufbereitungsleitung drehbar gelagert ist. Der Gaseinlass und der Gasauslass geben insbesondere eine Hauptströmungsrichtung für das gasförmige Medium durch die Aufbereitungsleitung vor. Insbesondere weist die Aufbereitungsleitung eine Montagestelle auf, an der das Drehlager unmittelbar befestigt ist oder an der das Halteelement mit dem Drehlager, insbesondere zerstörungsfrei wieder lösbar, befestigt, insbesondere verschraubt ist. Die Drehachse der Aufbereitungsvorrichtung ist vorzugsweise zumindest im Wesentlichen senkrecht zu der Hauptströmungsrichtung ausgerichtet und entlang der Hauptströmungsrichtung insbesondere zwischen dem Gaseinlass und dem Gasauslass angeordnet. Optional umfasst das Aufbereitungssystem zumindest eine weitere Aufbereitungsvorrichtung, welche innerhalb der Aufbereitungsleitung angeordnet ist. Die Aufbereitungsvorrichtung und die weitere Aufbereitungsvorrichtung sind vorzugsweise entlang der Hauptströmungsrichtung hintereinander angeordnet. Die Rotationselemente der Aufbereitungsvorrichtung und der weiteren Aufbereitungsvorrichtung können aus dem gleichen Material und/oder aus unterschiedlichen Materialen gefertigt sein. Optional weisen die Rotationselemente der Aufbereitungsvorrichtung einen anderen, insbesondere mittels der Abstandshalterelemente erzielten größeren, Abstand zueinander auf als Rotationselemente der weiteren Aufbereitungsvorrichtung, welche insbesondere kleinere Abstandshalterelemente oder keine Abstandshalterelemente umfasst. Die Aufbereitungsvorrichtung und die zusätzliche Aufbereitungsvorrichtung können Rotationselemente dergleichen Bauart oder unterschiedlicher Bauart aufweisen. In einer Ausgestaltung könnten die Rotationselemente in der Nähe des Gaseinlasses aus einem temperaturbeständigeren Material gefertigt sein als Rotationselemente, die entlang der Hauptströmungsrichtung näher bei dem Gasauslass angeordnet sind. Die Aufbereitungsleitung ist vorzugsweise aus einem technischen Kunststoff, beispielsweise PET, einem Hochleistungskunststoff, beispielsweise PPS, oder einem Metall gefertigt. Besonders bevorzugt ist die Aufbereitungsleitung in Segmente unterteilt ausgebildet, wobei in jedem Segment zumindest eine, insbesondere genau eine, Aufbereitungsvorrichtung angeordnet ist. Besonders bevorzugt weist jedes Segment der Aufbereitungsleitung eine eigene Zugangsluke auf, über welche die jeweilige Aufbereitungsvorrichtung einzeln ausgetauscht werden kann. Alternativ umfasst die Aufbereitungsleitung zumindest eine Zugangsluke, welche einen Zugang zu zumindest zwei der Aufbereitungsvorrichtungen erlaubt. Vorzugsweise ist die Aufbereitungsleitung gasdicht und flüssigkeitsdicht ausgebildet. Optional umfasst das Aufbereitungssystem zumindest eine zusätzliche Aufbereitungsleitung mit zumindest einer zusätzlichen Aufbereitungsvorrichtung, welche bezogen auf das gasförmige Medium strömungstechnisch in Reihe oder parallel zu der Aufbereitungsleitung an der Aufbereitungsleitung angeschlossen ist. Das Aufbereitungssystem umfasst vorzugsweise eine Motoreinheit zu einem Antrieb der Aufbereitungsvorrichtung, insbesondere mittels des Getriebeelements der Montageeinheit. Vorzugsweise umfasst die Motoreinheit zumindest einen Elektromotor. Insbesondere umfasst die Motoreinheit je einen Elektromotor pro Aufbereitungsvorrichtung. Alternativ umfasst die Motoreinheit ein Getriebe, welches ein Drehmoment des Motors auf zumindest zwei Aufbereitungsvorrichtungen aufteilt, insbesondere auf Aufbereitungsvorrichtungen derselben Aufbereitungsleitung. Vorzugsweise umfasst die Motoreinheit ein Getriebeelement, insbesondere ein Zahnrad und/oder eine Schnecke, zu einer mechanischen Kopplung des Motors mit dem Getriebeelement der Montageeinheit. Optional umfasst das Aufbereitungssystem eine autarke Energieversorgung zu einem Betrieb der Motoreinheit, insbesondere eine Batterie, einen Sonnenkollektor, eine Windturbine, einen Wasserstoffspeicher oder dergleichen. Zusätzlich oder alternativ umfasst das Aufbereitungssystem zumindest einen Anschluss für ein öffentliches Stromnetz. Das Aufbereitungssystem umfasst vorzugsweise einen Flüssigkeitskreislauf mit zumindest einer Pumpe zu einem Umwälzen der Flüssigkeit durch die Aufbereitungsvorrichtung hindurch. Vorzugsweise ist der Flüssigkeitsanschluss außerhalb der Aufbereitungsleitung angeordnet. Vorzugsweise umfasst die Aufbereitungsleitung zumindest einen Flüssigkeitsabfluss zu einem Abfließen der über die Aufbereitungsvorrichtung eingespeisten Flüssigkeit. Optional umfasst der Flüssigkeitskreislauf zumindest einen Sammelbehälter zu einem Aufbewahren der Flüssigkeit, welcher insbesondere an den Flüssigkeitsabfluss und die Pumpe angeschlossen ist. Das Aufbereitungssystem ist insbesondere für eine ausgebildete Verbrennungsvorrichtung mit einem Leistungsbereich von bis zu 6 kW, insbesondere bis zu 20 kW, besonders bevorzugt bis zu 1000 kW oder höher, ausgelegt.

Durch die erfindungsgemäße Ausgestaltung kann das Aufbereitungssystem mittels der Anzahl an Rotationselementen pro Aufbereitungsvorrichtung, mittels der Anzahl an Aufbereitungsvorrichtungen pro Aufbereitungsleitung und/oder mit der Anzahl an Aufbereitungsleitungen an einen Leistungsbereich der Verbrennungsvorrichtung vorteilhaft modular angepasst werden. Insbesondere können in einem relativ hohen Leistungsbereich die Verbrennungsvorrichtung, mit vorteilhaft wenig Aufwand mehrere Aufbereitungsvorrichtungen kombiniert werden, um Partikel aus dem gasförmigen Medium vorteilhaft zuverlässig auszuwaschen.

Weiter wird vorgeschlagen, dass eine maximale Erstreckung der Aufbereitungsleitung in einem zu einer Drehebene der Rotationseinheit senkrechten Querschnitt unwesentlich größer als eine maximale Erstreckung der Rotationseinheit in dieser Richtung ist, sodass zumindest eine Teilmenge der von der Aufbereitungsvorrichtung ausgeworfenen Flüssigkeit an einer Innenwandung der Aufbereitungsleitung abfließt. Unter "unwesentlich größer" als eine Vergleichsgröße soll insbesondere kleiner als 150 %, bevorzugt kleiner als 125 %, besonders bevorzugt kleiner als 110 % und größer als 100 % der Vergleichsgröße verstanden werden. Insbesondere weist die Aufbereitungsleitung Auffangflächen auf, welche dazu vorgesehen sind, die aus der Aufbereitungsvorrichtung ausgeworfene Flüssigkeit aufzufangen und abzuleiten. Die Auffangflächen sind insbesondere zumindest im Wesentlichen parallel zur Drehachse und insbesondere zumindest im Wesentlichen parallel zur Hauptströmungsrichtung angeordnet. Insbesondere ist ein Zwischenraum zwischen der Aufbereitungsvorrichtung und den Auffangflächen zur Bildung einer Flüssigkeitssperre für das gasförmige Medium während eines Betriebs des Aufbereitungssystems vorgesehen. Insbesondere ist ein minimaler Abstand zwischen den Auffangflächen und der Rotationseinheit kleiner als 5 cm, vorzugsweise kleiner als 3 cm, besonders bevorzugt kleiner als 2 cm. Durch die erfindungsgemäße Ausgestaltung kann ein vorteilhaft großer Anteil des gasförmigen Mediums durch die Rotationseinheit hindurch gelenkt werden. Insbesondere kann ein Anteil des gasförmigen Mediums, welches die Rotationseinheit umströmt, vorteilhaft klein gehalten werden. Insbesondere kann die Aufbereitungsleitung durch die ausgeworfene Flüssigkeit vorteilhaft gekühlt werden und insbesondere auch bei gasförmigen Medien mit hoher Temperatur vorteilhaft verschleißarm gehalten werden. Ferner kann vorteilhaft eine vorteilhaft große effektive Grenzfläche zwischen der Flüssigkeit und dem gasförmigen Medium erreicht werden, welche insbesondere über die Aufbereitungsvorrichtung hinaus geht und einen vorteilhaft großen Anteil einer Innenfläche der Aufbereitungsleitung einschließt. Insbesondere kann aufgrund der Kühlung mit der ausgeworfenen Flüssigkeit auf eine hohe Wärmebeständigkeit eines Materials für die Aufbereitungsleitung verzichtet werden und ein insbesondere vorteilhaft kostengünstiger technischer Kunststoff oder Hochleistungskunststoff zur Herstellung der Aufbereitungsleitung verwendet werden.

Darüber hinaus wird vorgeschlagen, dass das Aufbereitungssystem einen an der Aufbereitungsleitung angeordneten Siphon zu einem Auslass der von der Aufbereitungsvorrichtung ausgeworfenen Flüssigkeit aus der Aufbereitungsleitung umfasst. Insbesondere ist der Siphon an dem Flüssigkeitsabfluss der Aufbereitungsleitung angeschlossen. Durch die erfindungsgemäße Ausgestaltung kann ein Risiko eines Austritts des noch nicht aufbereiteten Gases aus der Aufbereitungsleitung vorteilhaft klein gehalten werden. Insbesondere kann ein vorteilhaft sicheres Aufbereitungssystem zur Verfügung gestellt werden.

Ferner wird vorgeschlagen, dass das Aufbereitungssystem zumindest ein Kühlelement zu einer Senkung einer Temperatur der Flüssigkeit, welches stromaufwärts des Flüssigkeitsauslasses angeordnet ist, umfasst. Das Kühlelement ist beispielsweise als Wärmeübertrager, insbesondere als Plattenwärmeübertrager oder Rohrbündelwärmeübertrager, ausgebildet, welcher insbesondere an einen externen Kühlmittelkreislauf, insbesondere eine Kühlwasserleitung angeschlossen ist. Beispielsweise ist das Kühlelement oder ein weiteres Kühlelement als Wärmepumpe und/oder als Thermoelement ausgebildet. Besonders bevorzugt ist das Kühlelement an die autarke Energieversorgung angeschlossen. Das Kühlelement ist strömungstechnisch bevorzugt zwischen der Pumpe und dem Flüssigkeitsanschluss angeordnet. Alternativ ist das Kühlelement oder ein zusätzliches Kühlelement zwischen der Pumpe und dem Flüssigkeitsabfluss angeordnet. Vorzugsweise ist in zumindest einer Ausgestaltung das Kühlelement derart ausgelegt, dass bei einer Temperatur des gasförmigen Mediums von bis zu 500°C, bevorzugt bis zu 750°C, besonders bevorzugt bis zu 1000°C, die Flüssigkeit eine Temperatur von maximal 100°C erreicht. Durch die erfindungsgemäße Ausgestaltung kann die Flüssigkeit vor einem Eintritt in die Aufbereitungsleitung vorteilhaft gekühlt werden. Insbesondere kann ein vorteilhaft effektiver Wärmeübertrag von dem gasförmigen Medium auf die Flüssigkeit erreicht werden. Insbesondere kann eine vorteilhaft hohe Effektivität einer Kondensation von in dem gasförmigen Medium enthaltener Feuchtigkeit erzielt werden. Ferner kann die in der Flüssigkeit enthaltene Wärme, welche insbesondere bis zu 30 % der Wärme des gasförmigen Mediums entspricht, vorteilhaft zur weiteren Nutzung bereitgestellt werden.

Weiterhin wird vorgeschlagen, dass der Gaseinlass in einem Flüssigkeitsauswurfbereich der Aufbereitungsvorrichtung angeordnet ist. Insbesondere sind die Auffangflächen in dem Flüssigkeitsauswurfbereich angeordnet. Der Gaseinlass ist insbesondere an einer der Auffangflächen angeordnet. Bevorzugt ist der Gaseinlass zumindest teilweise oberhalb eines maximalen Flüssigkeitspegels innerhalb der Aufbereitungsleitung angeordnet. Der maximale Flüssigkeitspegel ist beispielsweise über eine Überlaufvorrichtung oder über eine Regelung einer Einspeisemenge der Flüssigkeit in die Aufbereitungsvorrichtung gegeben. Der Gaseinlass ist vorzugsweise als, insbesondere metallener, Stutzen ausgebildet, insbesondere zu einem Anschluss einer Abgasleitung der Verbrennungsvorrichtung. Durch die erfindungsgemäße Ausgestaltung kann die Flüssigkeit in den Gaseinlass hineingelangen. Insbesondere kann der Gaseinlass vorteilhaft gekühlt werden. Insbesondere können thermo-mechanische Spannungen zwischen Gaseinlass und Aufbereitungsleitung vorteilhaft gering gehalten werden. Ferner kann ein Verletzungsrisiko für einen Benutzer vorteilhaft gering gehalten werden.

Des Weiteren wird vorgeschlagen, dass das Aufbereitungssystem eine, insbesondere die bereits genannte, an der Aufbereitungsleitung angeschlossene zusätzliche Aufbereitungsleitung mit einer, insbesondere der bereits genannten, zusätzlichen Aufbereitungsvorrichtung umfasst, wobei eine Flüssigkeitsversorgung der Aufbereitungsleitung fluidtechnisch getrennt von einer Flüssigkeitsversorgung der zusätzlichen Aufbereitungsleitung ausgebildet ist. Insbesondere umfasst ein zusätzlicher Flüssigkeitskreislauf des Aufbereitungssystems für die zusätzliche Aufbereitungsleitung einen zusätzlichen Siphon und insbesondere eine zusätzliche Pumpe. Optional umfasst der zusätzliche Flüssigkeitskreislauf einen zusätzlichen Sammelbehälter und/oder ein zusätzliches Kühlelement. Alternativ umfasst das Aufbereitungssystem einen gemeinsamen Flüssigkeitskreislauf für die Aufbereitungsleitung und die zusätzliche Aufbereitungsleitung. Durch die erfindungsgemäße Ausgestaltung können die Flüssigkeitskreisläufe vorteilhaft mit verschiedenen Temperaturen betrieben werden. Insbesondere können unterschiedlich starke Wärmeverbraucher als Kühlelemente eingesetzt werden.

Ferner wird vorgeschlagen, dass das Aufbereitungssystem eine Entnahmeeinheit zu einer Entnahme von aus dem gasförmigen Medium gewonnenem Kondensat aus der Aufbereitungsleitung umfasst. Die Entnahmeeinheit ist insbesondere zu einer Entnahme von technischem Wasser, insbesondere nach VDI 2035 und/oder gemäß SWKI BT 102-01, aus dem Flüssigkeitskreislauf vorgesehen. Das Kondensat liegt während des Betriebs des Aufbereitungssystems insbesondere als Gemisch mit der Flüssigkeit vor. Die Entnahmeeinheit ist insbesondere an dem Sammelbehälter angeschlossen und/oder der Sammelbehälter ist in die Entnahmeeinheit integriert. Vorzugsweise ist der Sammelbehälter zu einem Sedimentieren der auf die Flüssigkeit übertragenen Partikel vorgesehen. Vorzugsweise umfasst das Aufbereitungssystem zumindest einen Filter zu einer Reinigung der Flüssigkeit von den auf die Flüssigkeit übertragenen Partikeln. Die Entnahmeeinheit und/oder der Sammelbehälter umfasst vorzugsweise zumindest einen, insbesondere den bereits genannten, Filter zu einer Filterung der in der Flüssigkeit enthaltenen Partikel, beispielsweise einen Rollbandfilter und/oder einen, insbesondere offenzelligen, Filterschaum. Alternativ oder zusätzlich ist der Filter bezogen auf die Flüssigkeit stromaufwärts des Sammelbehälters angeordnet und insbesondere stromabwärts des Flüssigkeitsabflusses angeordnet. Die Entnahmeeinheit und/oder der Flüssigkeitskreislauf umfasst vorzugsweise zumindest ein pH-Korrekturelement, beispielsweise eine Opferelektrode, zu einer pH-Wertkorrektur der Flüssigkeit. Durch die erfindungsgemäße Ausgestaltung kann vorteilhaft eine in dem gasförmigen Medium enthaltene Feuchtigkeit genutzt werden. Insbesondere kann mit vorteilhaft wenig Aufwand technisches Wasser zur Verfügung gestellt werden. Beispielsweise kann aus einen Liter Heizöl bis zu 0,8 Liter Kondensat gewonnen werden. Beispielsweise kann aus 1 Kubikmeter Erdgas bis zu 1,5 Liter Kondensat gewonnen werden.

Darüber hinaus wird ein Verfahren zum Betrieb einer erfindungsgemäßen Aufbereitungsvorrichtung und/oder eines erfindungsgemäßen Aufbereitungssystems vorgeschlagen. Das Verfahren umfasst vorzugsweise eine Flüssigkeitshandhabung und eine Gashandhabung, welche insbesondere parallel zueinander ablaufen. Insbesondere wälzt die Pumpe die Flüssigkeit während der Flüssigkeitshandhabung in dem Flüssigkeitskreislauf um. Die Flüssigkeitshandhabung umfasst insbesondere einen Flüssigkeitskühlschritt, in welchem das Kühlelement die Flüssigkeit kühlt. Die Flüssigkeitshandhabung umfasst insbesondere einen Flüssigkeitseinspeisungsschritt, in welchem die, insbesondere gekühlte, Flüssigkeit über den Flüssigkeitsanschluss in die Aufbereitungsleitung eingespeist wird. Vorzugsweise wird in dem Flüssigkeitseinspeisungsschritt ein Volumenstrom der Flüssigkeit, beispielsweise über ein Regelventil des Aufbereitungssystems und/oder über die Pumpe, in Abhängigkeit von einem Volumenstrom und/oder einer Temperatur des gasförmigen Mediums gesteuert oder geregelt. Insbesondere steuert die Pumpe den Volumenstrom der Flüssigkeit durch die Aufbereitungsvorrichtung, sodass bei einer Temperatur des gasförmigen Mediums von bis zu 500°C, bevorzugt bis zu 750°C, besonders bevorzugt bis zu 1000°C, die Flüssigkeit eine Temperatur von maximal 100°C erreicht. Eine Steuereinheit des Aufbereitungssystems kann den Volumenstrom der Flüssigkeit anhand in einem Speicher der Steuereinheit hinterlegter kalorimetrischer Rechenvorschriften steuern und/oder anhand eines Temperatursensors des Aufbereitungssystems regeln. Alternativ gibt ein Benutzer einen Volumenstrom und/oder eine Menge der Flüssigkeit vor, beispielsweise durch ein manuell bedienbares Stellventil, durch eine im Vorfeld des Verfahrens in das Aufbereitungssystem eingespeiste Gesamtmenge der Flüssigkeit und/oder durch ein manuelles Einstellen einer Pumpleistung der Pumpe oder dergleichen. In dem Flüssigkeitseinspeisungsschritt wird die Flüssigkeit insbesondere durch die Flüssigkeitsleitung in der Rotationseinheit verteilt und von dieser in die Aufbereitungsleitung ausgeworfen. Die Flüssigkeitshandhabung umfasst insbesondere einen Flüssigkeitssammelschritt. In dem Flüssigkeitssammelschritt läuft die Flüssigkeit aufgrund der Schwerkraft entlang der Auffangflächen über den Flüssigkeitsabfluss aus der Aufbereitungsleitung ab. Insbesondere sammelt der Sammelbehälter in dem Flüssigkeitssammelschritt die Flüssigkeit. Vorzugsweise umfasst die Flüssigkeitshandhabung einen Wärmeverwertungsschritt. Insbesondere wird in dem Wärmeverwertungsschritt von der Flüssigkeit in der Aufbereitungsleitung aufgenommene Wärme an ein externes Kühlmittel übertragen. Der Wärmeverwertungsschritt kann identisch mit dem Kühlschritt sein oder als separater Schritt ausgeführt werden. Optional wird die Flüssigkeit in der unmittelbar an dem Gaseinlass angeordneten Aufbereitungsleitung ganz oder teilweise, vor oder nach der Einspeisung in die Aufbereitungsleitung verdampft, insbesondere um eine Durchmischung mit dem gasförmigen Medium zu verbessern. Vorzugsweise wird die verdampfte Flüssigkeit, insbesondere zusammen mit dem gasförmigen Medium, in einer nachfolgenden Aufbereitungsleitung wieder kondensiert. Vorzugsweise umfasst die Flüssigkeitshandhabung einen Flüssigkeitsentnahmeschritt, in welchem ein Teil der Flüssigkeit von der Entnahmeeinheit entnommen, aufbereitet und insbesondere als technisches Wasser zur Verfügung gestellt wird.

Die Gashandhabung umfasst insbesondere einen Gaseinspeisungsschritt, in welchem das gasförmige Medium über den Gaseinlass in die Aufbereitungsleitung eingelassen wird. Vorzugsweise umfasst das Aufbereitungssystem zumindest einen Ventilator, insbesondere in dem Gasauslass, welcher das gasförmige Medium durch die Aufbereitungsleitung fördert. Alternativ, insbesondere wenn die Verbrennungsvorrichtung als Kleinanlage ausgebildet ist, durchströmt das Gas die Aufbereitungsleitung selbsttätig, beispielsweise aufgrund eines Kamins der Verbrennungsvorrichtung. Besonders bevorzugt ist die Flüssigkeitshandhabung zu einem Zeitpunkt des Gaseinspeisungsschritts bereits aktiviert. Vorzugsweise umfasst die Gashandhabung einen Aufbereitungsschritt, in welchem das gasförmige Medium die Rotationseinheit durchströmt. Insbesondere durchströmt das gasförmige Medium einen Zwischenbereich zwischen zwei Rotationselementen, insbesondere entlang der mit der Flüssigkeit benetzten Hauptaußenflächen. Bei einer Passage des gasförmigen Mediums durch die Rotationseinheit hindurch, vermischt die Rotationseinheit insbesondere das gasförmige Medium mit der Flüssigkeit. Insbesondere werden die in dem gasförmigen Medium enthaltenen Partikel teilweise von der Flüssigkeit ausgewaschen und/oder bleiben teilweise an den Rotationselementen hängen. Insbesondere überträgt das gasförmige Medium Wärme auf die Flüssigkeit und wird dadurch gekühlt. Optional wird das gasförmige Medium in dem Aufbereitungsschritt über eine Kaskade weiterer Aufbereitungsvorrichtungen gelenkt. Insbesondere wird das, insbesondere gekühlte und partikelarme, gasförmige Medium in einem Gasauslassschritt über den Gasauslass an die Umgebung abgegeben. "Partikelarm" soll insbesondere als mit einem Partikelanteil unter einem Grenzwert verstanden werden, der beispielsweise durch eine der oben genannten Normen gegeben ist. Vorzugsweise umfasst das Verfahren einen Wartungsschritt. In dem Wartungsschritt wird insbesondere die Aufbereitungsvorrichtung aus der Aufbereitungsleitung entnommen, gereinigt, beispielsweise durch einen Dampfstrahler, und wiedereingesetzt und/oder durch eine neue Aufbereitungsvorrichtung ersetzt. In dem Wartungsschritt wird insbesondere die Flüssigkeit ausgetauscht und optional der Sammelbehälter gereinigt. Durch die erfindungsgemäße Ausgestaltung kann das Aufbereitungssystem vorteilhaft effizient, vorteilhaft effektiv betrieben werden und ferner mit vorteilhaft geringem Aufwand gewartet werden. Weiter kann aus, insbesondere auch aus aggressiven, gasförmigen Medien eine Energierückgewinnung erzielt werden. Insbesondere kann das gasförmige Medium vorteilhaft kostenarm aufbereitet werden.

Darüber hinaus wird vorgeschlagen, dass die Flüssigkeit und das gasförmige Medium durch Drehen der Aufbereitungsvorrichtung vermischt werden, so dass Partikel und Wärme von dem gasförmigen Medium auf die Flüssigkeit übertragen und mit der Flüssigkeit von der Aufbereitungsvorrichtung weggeführt werden. In dem Flüssigkeitseinspeisungsschritt tritt die Flüssigkeit über den Flüssigkeitsauslass an dem Rotationselement aus und benetzt dieses. Insbesondere tritt die Flüssigkeit an jedem Rotationselement über einen entsprechenden Flüssigkeitsauslass aus. Die Flüssigkeitshandhabung umfasst insbesondere einen Auswurfschritt, in welchem die Flüssigkeit durch eine Drehbewegung der Rotationseinheit und dadurch verursachter Fliehkräfte aus der Rotationseinheit ausgeworfen wird. Insbesondere wird die Rotationseinheit zumindest während des Auswurfsschritts von der Motoreinheit um die Drehachse gedreht, besonders bevorzugt wird die Rotationseinheit für die Dauer des Verfahrens kontinuierlich um die Drehachse gedreht. Vorzugsweise werden/wird eine Drehrichtung und/oder eine Drehzahl der Rotationseinheit von der Steuereinheit des Aufbereitungssystems gesteuert oder geregelt. Optional ist die Drehzahl beispielsweise von einem Bediener einstellbar. Bevorzugt wird die Rotationseinheit von der Motoreinheit mit einer Drehzahl von mehr als 60 Umdrehungen pro Minute, bevorzugt mit mehr als 120 Umdrehungen pro Minute, besonders bevorzugt mit mehr als 180 Umdrehungen pro Minute, optional mit mehr als 240 Umdrehungen pro Minute, um die Drehachse gedreht. Bevorzugt wird die Rotationseinheit von der Motoreinheit mit einer Drehzahl von weniger als 740 Umdrehungen pro Minute, bevorzugt von weniger als 620 Umdrehungen pro Minute, besonders bevorzugt von weniger als 500 Umdrehungen pro Minute, optional von weniger als 300 Umdrehungen pro Minute, um die Drehachse gedreht. Während des Auswurfschritts wird die Flüssigkeit durch die Drehbewegung von dem Flüssigkeitsauslass entlang der Hauptaußenflächen beschleunigt. Insbesondere wird die Flüssigkeit in dem Auswurfschritt mittels der Umlenkelemente über die Hauptaußenfläche verteilt und insbesondere auch auf das direkt benachbarte weitere Rotationselement gelenkt. Insbesondere wird die Flüssigkeit in dem Flüssigkeitsauswurfschritt tangential von der Rotationseinheit in Richtung der Auffangflächen weggeschleudert. Insbesondere bildet sich in dem Auswurfschritt zwischen den Auffangflächen und der Rotationseinheit eine Flüssigkeitssperre, welche einen Weg für das gasförmige Medium um die Rotationseinheit herum zumindest teilweise versperrt. In dem Auswurfschritt schleudert die Rotationseinheit insbesondere die Flüssigkeit teilweise in den Gaseinlass hinein, sodass die Flüssigkeit den Gaseinlass und das gasförmige Medium kühlt. Durch die erfindungsgemäße Ausgestaltung kann vorteilhaft eine Aufbereitung des gasförmigen Mediums erreicht werden und gleichzeitig Wärme aus dem gasförmigen Medium zurückgewonnen werden.

Die erfindungsgemäße Aufbereitungsvorrichtung, das erfindungsgemäße Aufbereitungssystem und/oder das erfindungsgemäße Verfahren sollen/soll hierbei nicht auf die oben beschriebene Anwendung und Ausführungsform beschränkt sein. Insbesondere kann die erfindungsgemäße Aufbereitungsvorrichtung, das erfindungsgemäße Aufbereitungssystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: Eine schematische Darstellung einer Rotationseinheit einer erfindungsgemäßen Aufbereitungsvorrichtung,
- Fig. 2: eine schematische Darstellung eines Rotationselements der Rotationseinheit,
- Fig. 3: eine schematische Schnittdarstellung der Rotationseinheit,
- Fig. 4: eine schematische Darstellung der erfindungsgemäßen Aufbereitungsvorrichtung,
- Fig. 5: eine schematische Darstellung eines erfindungsgemäßen Aufbereitungssystems,
- Fig. 6: eine schematische Darstellung eines erfindungsgemäßen Verfahrens,
- Fig. 7: eine schematische Darstellung einer alternativen Ausgestaltung einer erfindungsgemäßen Ausbereitungsvorrichtung und
- Fig. 8: eine schematische Explosionsdarstellung einer alternativen Ausgestaltung eines erfindungsgemäßen Systems.

### Beschreibung der Ausführungsbeispiele

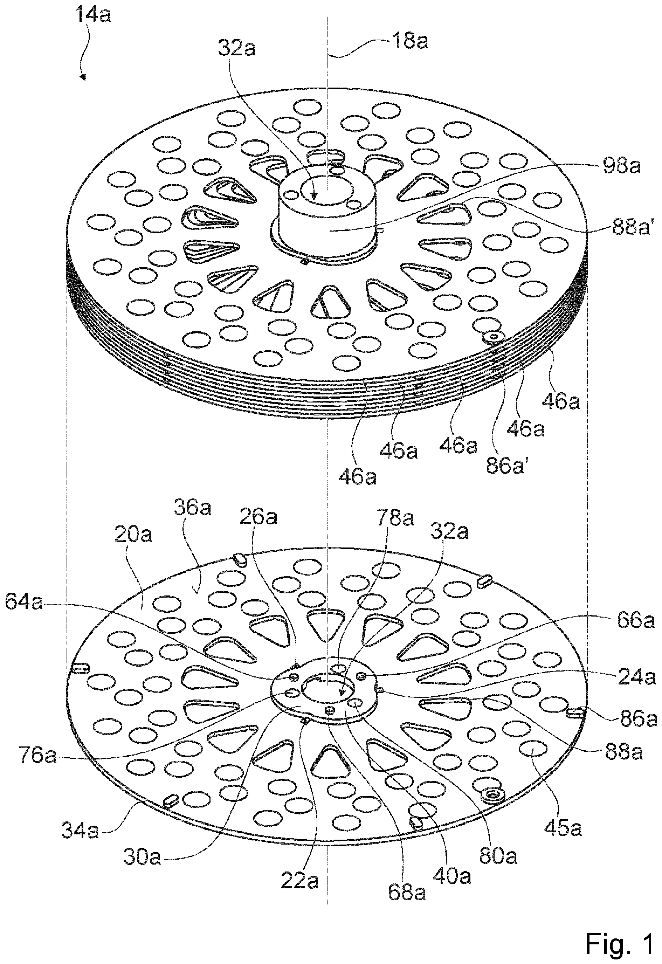

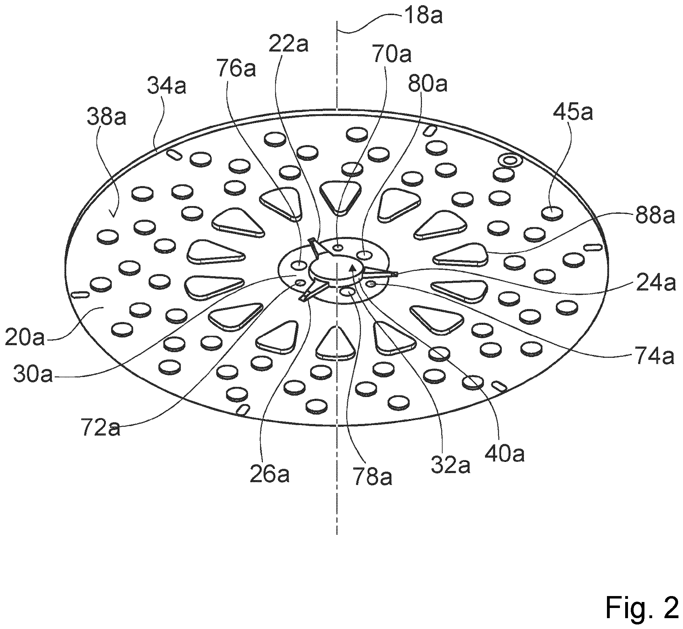

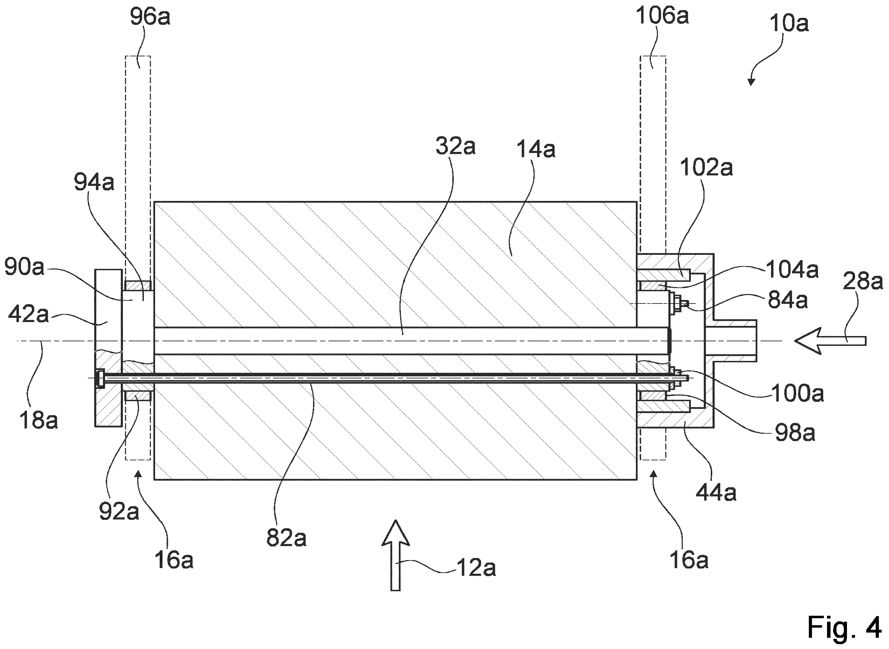

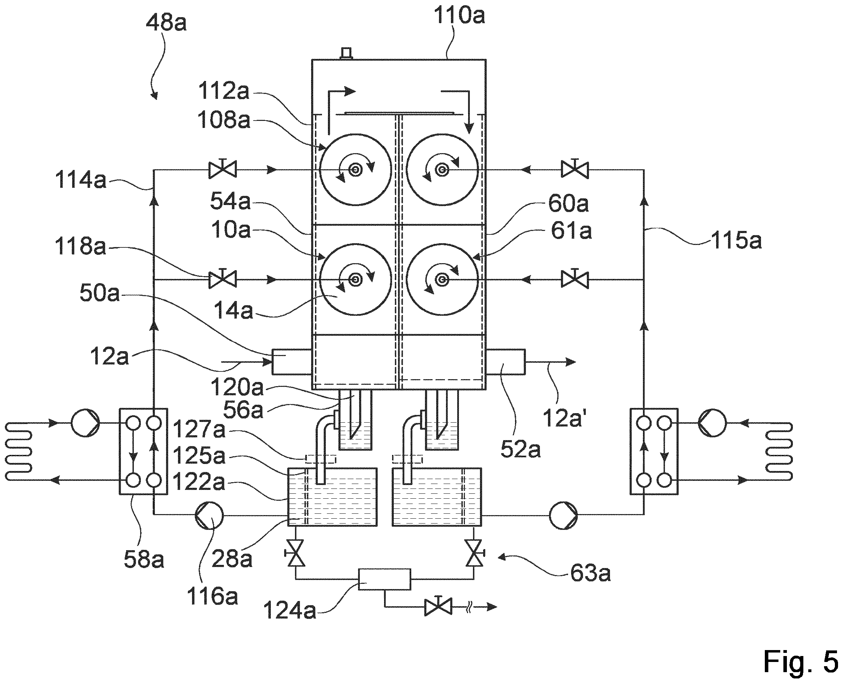

Die Figur 1 zeigt eine Rotationseinheit 14a einer Aufbereitungsvorrichtung 10a. Die Aufbereitungsvorrichtung 10a ist zu einem Abscheiden von Partikeln aus einem gasförmigen Medium 12a (vgl. Figur 5) vorgesehen. Die Aufbereitungsvorrichtung 10a umfasst eine Montageeinheit 16a, welche in Figur 4 dargestellt ist. Die Montageeinheit 16a ist zu einer um eine Drehachse 18a drehbaren Anordnung der Rotationseinheit 14a innerhalb des gasförmigen Mediums 12a vorgesehen. Die Rotationseinheit 14a umfasst zumindest ein Rotationselement 20a. Das Rotationselement 20a weist einen scheibenförmigen Hauptkörper 34a auf. Der Hauptkörper 34a umfasst zwei zumindest im Wesentlichen parallel verlaufende Hauptaußenflächen 36a, 38a, wovon eine in Figur 2 dargestellt ist. Die Hauptaußenflächen 36a, 38a sind insbesondere zumindest im Wesentlichen senkrecht zur Drehachse 18a angeordnet. Die Rotationseinheit 14a umfasst einen Flüssigkeitsauslass 22a, 24a, 26a. Der Flüssigkeitsauslass 22a, 24a, 26a ist zu einem Benetzen einer Oberfläche, insbesondere der Hauptaußenflächen 36a, 38a, des Rotationselements 20a mit einer Flüssigkeit 28a (vgl. Fig. 5) vorgesehen. Der Flüssigkeitsauslass 22a, 24a, 26a ist an dem Rotationselement 20a angeordnet. Zusätzlich umfasst das Rotationselement 20a zumindest eine Leitungsstruktur 30a. Die Leitungsstruktur 30a bildet einen Teilabschnitt einer Flüssigkeitsleitung 32a der Rotationseinheit 14a zu dem Flüssigkeitsauslass 22a, 24a, 26a. Die Flüssigkeitsleitung 32a verläuft zumindest im Wesentlichen parallel zu der Drehachse 18a.

Die Drehachse 18a verläuft insbesondere durch die Flüssigkeitsleitung 32a. Die Leitungsstruktur 30a weist insbesondere eine Leitungswand 40a auf, welche über eine der Hauptaußenflächen 36a in Richtung der Drehachse 18a hinausragt. Die Leitungsstruktur 30a begrenzt vorzugsweise eine Ausnehmung in dem Rotationselement 20a, welche den Teilabschnitt der Flüssigkeitsleitung 32a bildet. Vorzugsweise ist der Flüssigkeitsauslass 22a, 24a, 26a an der Ausnehmung angeschlossen. Besonders bevorzugt ist der Flüssigkeitsauslass 22a, 24a, 26a als, beispielsweise trapezförmige, Ausnehmung in dem Hauptkörper 34a ausgebildet, welche insbesondere entlang der Drehachse 18a den Hauptkörper 34a vollständig durchbricht. Insbesondere führt der Flüssigkeitsauslass 22a, 24a, 26a senkrecht von der Drehachse 18a weg. Vorzugsweise bedeckt die Leitungswand 40a der Leitungsstruktur 30a den Flüssigkeitsauslass 22a, 24a, 26a auf zumindest einer der Hauptaußenflächen 36a teilweise. Vorzugsweise umfasst das Rotationselement 20a mehrere, beispielsweise drei, insbesondere baugleich ausgebildete, Flüssigkeitsauslässe 22a, 24a, 26a, die vorzugsweise sternförmig von der Drehachse 18a wegführen. Insbesondere ist die Flüssigkeitsleitung 32a dazu vorgesehen, die Flüssigkeit 28a entlang der Drehachse 18a zu transportieren und auf die Flüssigkeitsauslässe 22a, 24a, 26a zu verteilen. Der Flüssigkeitsauslass 22a, 24a, 26a mündet in zumindest einer der Hauptaußenflächen 36a, 38a. Insbesondere sind die Flüssigkeitsauslässe 22a, 24a, 26a dazu vorgesehen, die Flüssigkeit 28a senkrecht zur Drehachse 18a über die Hauptaußenflächen 36a, 38a zu verteilen. Das Rotationselement 20a ist aus einem Plastik, insbesondere PET oder PSS, gefertigt.

Die Rotationseinheit 14a umfasst zumindest ein, insbesondere baugleiches, weiteres Rotationselement 46a. Strukturen des weiteren Rotationselements 46a haben das gleiche Bezugszeichen wie die entsprechenden Strukturen des Rotationselements 20a, wobei zu einer Unterscheidung den Bezugszeichen des weiteren Rotationselements 46a ein Apostroph angehängt ist. Das weitere Rotationselement 46a ist entlang der Drehachse 18a mit dem Rotationselement 20a aneinander gestapelt angeordnet. Insbesondere umfasst die Rotationseinheit 14a eine Vielzahl an weiteren Rotationselementen 46a, die der Übersichtlichkeit halber hier nur zum Teil eingezeichnet wurden. Die Leitungsstruktur 30a umfasst zumindest ein Verbindungselement 64a, 66a, 68a, insbesondere mehrere baugleiche, beispielsweise zwei, drei oder mehr, Verbindungselemente 64a, 66a, 68a. Das Verbindungselement 64a, 66a, 68a, ist insbesondere zu einer drehfesten Verbindung des Rotationselements 20a mit dem direkt benachbarten weiteren Rotationselement 46a vorgesehen. Das Verbindungselement 64a, 66a, 68a ist auf der Leitungswand 40a angeordnet und ragt insbesondere zumindest im Wesentlichen parallel zur Drehachse 18a über die Leitungswand 40a hinaus. Insbesondere ist das Verbindungselement 64a, 66a, 68a als Fixierstift ausgebildet. Insbesondere umfasst das Rotationselement 20a auf der den Verbindungselementen 64a, 66a, 68a abgewandten Hauptaußenfläche 38a weitere Verbindungselemente 70a, 72a, 74a, welche zu einer Aufnahme von Verbindungselementen eines der weiteren Rotationselemente 46a vorgesehen sind. Die Leitungswand 40a der Leitungsstruktur 30a nimmt eine Antriebswelle zu einem Antrieb der Rotationseinheit 14a auf und/oder bildet diese. Insbesondere wird ein Drehmoment über die von den Rotationselementen 20a, 46a gebildeten Verbindungselemente 64a, 66a, 68a von einem der Rotationselemente 20a, 46a zum nächsten übertragen. Vorzugsweise weist die Leitungsstruktur 30a eine Fixieraufnahme 76a, 78a, 80a, insbesondere mehrere baugleiche, beispielsweise zwei, drei oder mehr Fixieraufnahmen 76a, 78a, 80a, auf. In der Fixieraufnahme 76a, 78a, 80a ist ein Fixierelement 82a, 84a, insbesondere eine Haltestange, der Montageeinheit 16a angeordnet (siehe Figur 4), auf welchem insbesondere alle Rotationselemente 20a, 46a der Rotationseinheit 14a gemeinsam angeordnet sind. Insbesondere wird über das Fixierelement 82a, 84a ein Drehmoment auf die gesamte Rotationseinheit 14a gleichzeitig übertragen.

Das Rotationselement 20a umfasst Umlenkelemente 45a, wovon der Übersichtlichkeit halber nur eines mit einem Bezugszeichen versehen ist. Die Umlenkelemente 45a sind zu einer Verteilung der Flüssigkeit 28a vorgesehen. Die Umlenkelemente 45a sind beidseitig an dem scheibenförmigen Hauptkörper 34a des Rotationselements 20a angeordnet (vgl. Fig. 2). Die Umlenkelemente 45a sind beispielsweise als Noppen ausgebildet.

Vorzugsweise umfasst das Rotationselement 20a zumindest ein Stabilisierungselement 86a, insbesondere mehrere baugleiche, beispielsweise zwei bis sechs oder mehr, Stabilisierungselemente 86a, von denen hier der Übersichtlichkeit halber nur eines mit einem Bezugszeichen versehen ist. Vorzugsweise sind die Stabilisierungselemente 86a an einem Außenrand des Hauptkörpers 34a angeordnet und sind insbesondere als Abstandshalter zwischen den Hauptkörpern 34a direkt benachbarte Rotationselemente 20a, 46a ausgebildet. Vorzugsweise umfasst das Rotationselement 20a eine Vielzahl an, insbesondere mehr als drei, vorzugsweise mehr als zehn, Verteileraussparungen 88a, von denen hier der Übersichtlichkeit halber nur eines mit einem Bezugszeichen versehen ist. Die Verteileraussparungen 88a sind insbesondere drehsymmetrisch bezüglich der Drehachse 18a in dem Hauptkörper 34a angeordnet. Die Verteileraussparungen 88a sind insbesondere dazu vorgesehen, das gasförmige Medium 12a und/oder die Flüssigkeit 28a parallel zur Drehachse 18a innerhalb der Rotationseinheit 14a zu verteilen. Besonders bevorzugt sind die Verteileraussparungen 88a, 88a' verschiedener Rotationselemente 20a, 46a in einer Ebene senkrecht zur Drehachse 18a gegeneinander versetzt angeordnet. Bevorzugt ist der kleinste gemeinsame Teiler einer Anzahl der Verteileraussparungen 88a und der Anzahl an Fixierelementen 82a, 84a ungleich der Anzahl an Fixierelementen 82a, 84a, insbesondere kleiner als die Anzahl an Fixierelementen 82a, 84a, besonders bevorzugt gleich eins.

Figur 2 zeigt die von der Leitungswand 40a abgewandte Hauptaußenfläche 38a des Rotationselements 20a. Vorzugsweise schließt das Rotationselement 20a mit der von der Leitungswand 40a abgewandten Hauptaußenfläche 38a ab. Insbesondere sind alle Strukturelemente, welche über eine der Hauptaußenflächen 36a hinausragen, auf derselben Hauptaußenfläche 36a angeordnet. Insbesondere sind die Umlenkelemente 45a auf der von der der Leitungswand 40a abgewandten Hauptaußenfläche 38a als Negativform ausgebildet, welche in diese Hauptaußenfläche 38a hineinragt.

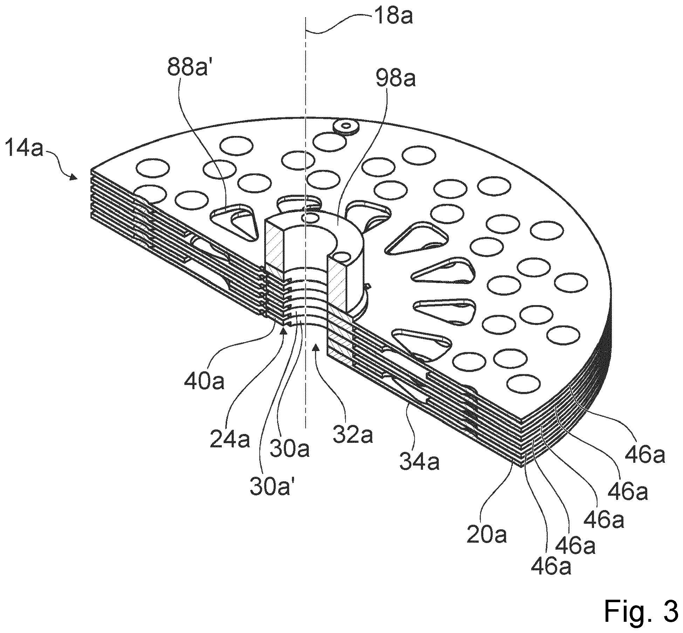

Figur 3 zeigt einen Schnitt der Rotationseinheit 14a in einer die Drehachse 18a enthaltenden Ebene. Insbesondere wird die Flüssigkeitsleitung 32a durch einen Stapel der Leitungsstrukturen 30a, 30a' der Rotationselemente 20a, 46a gebildet.

Figur 4 zeigt die Aufbereitungsvorrichtung 10a. Die Montageeinheit 16a umfasst ein mit dem Rotationselement 20a drehfest verbundenes Getriebeelement 42a zu einem Antrieb der Rotationseinheit 14a. Das Getriebeelement 42a ist insbesondere als Zahnrad ausgebildet. Insbesondere ist an dem Getriebeelement 42a das Fixierelement 82a, 84a drehfest befestigt. Vorzugsweise ist zwischen dem Getriebeelement 42a und der Rotationseinheit 14a ein Lagereinsatz 90a der Montageeinheit 16a angeordnet. Der Lagereinsatz 90a umfasst vorzugsweise einen Montagekörper 94a und einen Gleitring 92a, der auf dem Montagekörper 94a aufgezogen oder eingelassen ist. Insbesondere weist der Montagekörper 94a eine Lagerfixierausnehmung auf, in welcher das Fixierelement 82a, 84a angeordnet ist und insbesondere den Lagereinsatz 90a drehfest mit dem Getriebeelement 42a und der Rotationseinheit 14a verbindet. Optional umfasst die Montageeinheit 16a ein Halteelement 96a, in welchem ein Gegenring zu dem Gleitring 92a angeordnet ist. Vorzugsweise umfasst die Montageeinheit 16a ein Dichtungselement, insbesondere einen Wellendichtring, welcher in dem Halteelement 96a angeordnet ist und in welchem der Montagekörper 94a angeordnet ist. Vorzugsweise umfasst die Montageeinheit 16a einen weiteren Lagereinsatz 98a. Der weitere Lagereinsatz 98a ist auf einer dem Lagereinsatz 90a abgewandten Seite der Rotationseinheit 14a angeordnet. Insbesondere ist das Fixierelement 82a, 84a an dem weiteren Lagereinsatz 98a befestigt, beispielsweise mittels einer Schraubverbindung 100a. Die Montageeinheit 16a umfasst einen Flüssigkeitsanschluss 44a. Das Getriebeelement 42a und der Flüssigkeitsanschluss 44a sind entlang der Drehachse 18a auf verschiedenen Seiten der Rotationseinheit 14a angeordnet. Vorzugsweise umgreift der Flüssigkeitsanschluss 44a den weiteren Lagereinsatz 98a in einer zur Drehachse 14a senkrechten Ebene. Insbesondere umfasst der Flüssigkeitsanschluss 44a einen Gegenring 102a für einen Gleitring 104a des weiteren Lagereinsatzes 98a. Optional umfasst die Montageeinheit 16a ein weiteres Halteelement 106a, welches eine Fixierung, insbesondere ein Gewinde, umfasst, mit welcher der Flüssigkeitsanschluss 44a an dem Halteelement 106a befestigt wird.

Alternativ ist der Flüssigkeitsanschluss 44a einstückig mit dem Halteelement 106a ausgebildet. Insbesondere ist das Halteelement 96a und/oder das weitere Halteelement 106a dazu vorgesehen, die Aufbereitungsvorrichtung 10a in einem vormontierten Zustand als Ganzes in eine Leitung für das gasförmige Medium 12a einzusetzen.

Figur 5 zeigt ein Aufbereitungssystem 48a. Das Aufbereitungssystem 48a ist zu einem Abscheiden von Partikeln aus einem gasförmigen Medium 12a vorgesehen. Das Aufbereitungssystem 48a umfasst zumindest die Aufbereitungsvorrichtung 10a. Das Aufbereitungssystem 48a umfasst zumindest einen Gaseinlass 50a für das mit den Partikeln versetzte gasförmige Medium 12a. Das Aufbereitungssystem 48a umfasst zumindest einen Gasauslass 52a für das gasförmige Medium 12a' in einem aufbereiteten Zustand. Das Aufbereitungssystem 48a umfasst zumindest eine Aufbereitungsleitung 54a, welcher den Gaseinlass 50a mit dem Gasauslass 52a strömungstechnisch verbindet.

Insbesondere geben der Gaseinlass 50a und der Gasauslass 52a eine Hauptströmungsrichtung für das gasförmige Medium 12a vor. Die Aufbereitungsvorrichtung 10a ist im Inneren der Aufbereitungsleitung 54a drehbar gelagert. Die Drehachse 18a ist insbesondere zumindest im Wesentlichen senkrecht zur Hauptströmungsrichtung und insbesondere zumindest im Wesentlichen senkrecht zur Schwerkraft ausgerichtet. In der Aufbereitungsleitung 54a ist insbesondere zumindest eine weitere Aufbereitungsvorrichtung 108a angeordnet. Die Aufbereitungsvorrichtung 10a und die weitere Aufbereitungsvorrichtung 108a sind bezüglich der Hauptströmungsrichtung hintereinander, insbesondere übereinander, angeordnet. Optional umfasst die Aufbereitungsleitung 54a Siebböden, beispielsweise zwischen der Aufbereitungsvorrichtung 10a und der weiteren Aufbereitungsvorrichtung 108a. Das Aufbereitungssystem 48a umfasst eine an der Aufbereitungsleitung 54a angeschlossene zusätzliche Aufbereitungsleitung 60a mit zumindest einer zusätzlichen Aufbereitungsvorrichtung 61a. Die zusätzliche Aufbereitungsleitung 54a ist vorzugsweise in einer zu der Hauptströmungsrichtung im Inneren der Aufbereitungsleitung 54a senkrechten Richtung neben der Aufbereitungsleitung 54a angeordnet. Die zusätzliche Aufbereitungsleitung 60a ist strömungstechnisch insbesondere zwischen der Aufbereitungsleitung 54a und dem Gasauslass 52a angeordnet. Alternativ sind die Aufbereitungsleitung 54a und die zusätzliche Aufbereitungsleitung 60a strömungstechnisch parallel an dem Gaseinlass 50a und dem Gasauslass 52a angeschlossen. Vorzugsweise weist das Aufbereitungssystem 48a eine Umlenkleitung 110a auf, welche die Aufbereitungsleitung 54a strömungstechnisch mit der zusätzlichen Aufbereitungsleitung 60a verbindet, insbesondere in Reihe schaltet. Eine Flüssigkeitsversorgung der Aufbereitungsleitung 54a ist fluidtechnisch getrennt von einer Flüssigkeitsversorgung der zusätzlichen Aufbereitungsleitung 60a ausgebildet.

Das Aufbereitungssystem 48a umfasst insbesondere einen Flüssigkeitskreislauf 114a zu einer Flüssigkeitsversorgung der Aufbereitungsleitung 54a mit der Flüssigkeit 28a. Der Flüssigkeitskreislauf 114a umfasst insbesondere eine Pumpe 116a zu einem Umwälzen der Flüssigkeit 28a. Der Flüssigkeitskreislauf 114a umfasst vorzugsweise zumindest ein, insbesondere pro Aufbereitungsvorrichtung 10a der Aufbereitungsleitung 54a ein, Regelventil 118a zu einer Einstellung eines Volumenstroms der Flüssigkeit 28a und/oder ein Sperrventil. Insbesondere ist der Flüssigkeitsanschluss 44a in dem Flüssigkeitskreislauf 114a stromabwärts der Pumpe 116a angeordnet. Insbesondere ist die Flüssigkeitsleitung 32a stromabwärts des Flüssigkeitsanschlusses 44a in dem Flüssigkeitskreislauf 114a angeordnet. Insbesondere ist der Flüssigkeitsauslass 22a, 24a, 26a stromabwärts der Flüssigkeitsleitung 32a in dem Flüssigkeitskreislauf 114a angeordnet. Insbesondere weist die Aufbereitungsleitung 54a Auffangflächen 112a auf, die dazu vorgesehen sind, die von der Rotationseinheit 14a ausgeworfene Flüssigkeit 28a aufzufangen und abzuleiten. Die Aufbereitungsleitung 54a umfasst insbesondere einen Flüssigkeitsabfluss 120a. Das Aufbereitungssystem 48a umfasst einen an der Aufbereitungsleitung 54a, insbesondere dem Flüssigkeitsabfluss 120a, angeordneten Siphon 56a zu einem Auslass der von der Aufbereitungsvorrichtung 10a ausgeworfenen Flüssigkeit 28a aus der Aufbereitungsleitung 54a. Der Flüssigkeitskreislauf 114a umfasst vorzugsweise stromabwärts des Siphons 56a einen Sammelbehälter 122a. Insbesondere ist die Pumpe 116a an dem Sammelbehälter 122a angeschlossen. Das Aufbereitungssystem 48a umfasst insbesondere einen analog zu dem Flüssigkeitskreislauf 114a ausgebildeten zusätzlichen Flüssigkeitskreislauf 115a zu einer Flüssigkeitsversorgung der zusätzlichen Aufbereitungsleitung 60a mit der Flüssigkeit 28a. Der Flüssigkeitskreislauf 114a wird beispielsweise bis 100°C betrieben. Der zusätzliche Flüssigkeitskreislauf 115a wird beispielsweise bis 30°C betrieben. Bei einer Ausgestaltung mit einer weiteren Aufbereitungsleitung, welche stromabwärts der zusätzlichen Aufbereitungsleitung 60a angeordnet ist, ist diese beispielsweise an einen weiteren Flüssigkeitskreislauf angeschlossen, der bis 20°C betrieben wird. Alternativ werden zwei oder mehr Flüssigkeitskreisläufe bis zu derselben Temperatur betrieben.

Eine maximale Erstreckung der Aufbereitungsleitung 54a in einem zu einer Drehebene der Rotationseinheit 14a senkrechten Querschnitt, insbesondere in einem zur Hauptströmungsrichtung senkrechten Querschnitt, ist unwesentlich größer als eine maximale Erstreckung der Rotationseinheit 14a in dieser Richtung, sodass zumindest eine Teilmenge der von der Aufbereitungsvorrichtung ausgeworfenen Flüssigkeit an einer Innenwandung der Aufbereitungsleitung 54a abfließt. Insbesondere ist ein Zwischenraum zwischen der Rotationseinheit 14a und den Auffangflächen 112a dazu vorgesehen, bei einem Betrieb des Aufbereitungssystems 48a mit der von der Rotationseinheit 14a ausgeworfenen Flüssigkeit 28a gefüllt zu werden, bevor diese entlang der Auffangflächen 112a abfließt. Der Gaseinlass 50a ist in einem Flüssigkeitsauswurfbereich der Aufbereitungsvorrichtung 10a, insbesondere an den Auffangflächen 112a angeordnet, insbesondere sodass ein Teil der von der Rotationseinheit 14a ausgeworfenen Flüssigkeit 28a unmittelbar in den Gaseinlass 50a hineingeschleudert wird.

Das Aufbereitungssystem 48a umfasst ein Kühlelement 58a zu einer Senkung einer Temperatur der Flüssigkeit 28a. Das Kühlelement 58a ist stromaufwärts des Flüssigkeitsauslasses 22a, 24a, 26a, insbesondere oberhalb des Flüssigkeitsanschlusses 44a, angeordnet. Vorzugsweise ist das Kühlelement 58a als Wärmeübertrager ausgebildet. Das Kühlelement 58a ist strömungstechnisch insbesondere zwischen der Pumpe 116a und dem Flüssigkeitsanschluss 44a, insbesondere dem Regelventil 118a, angeordnet.

Das Aufbereitungssystem 48a umfasst eine Entnahmeeinheit 63a zu einer Entnahme von aus dem gasförmigen Medium 12a gewonnenem Kondensat aus der Aufbereitungsleitung 54a. Die Entnahmeeinheit 63a ist insbesondere an dem Sammelbehälter 122a angeschlossen. Vorzugsweise umfasst die Entnahmeeinheit 63a zumindest ein pH-Korrekturelement 124a zu einer pH-Wertkorrektur der Flüssigkeit 28a. Optional umfasst die Entnahmeeinheit 63a zumindest ein Filterelement 125a, welches in dem Sammelbehälter 122a angeordnet ist, und insbesondere zu einem Zurückhalten der ausgewaschenen Partikel in dem Sammelbehälter 122a vorgesehen ist. Alternativ oder zusätzlich umfasst das Aufbereitungssystem 48a einen Filter 127a. Der Filter 127a ist vorzugsweise, bezogen auf die Flüssigkeit 28a, fluidtechnisch zwischen dem Siphon 56a und dem Sammelbehälter 122a angeordnet. Insbesondere ist der Filter 127a zu einer Reinigung der Flüssigkeit 28a von den ausgewaschenen Partikeln vor einer Einspeisung der Flüssigkeit 28a in den Sammelbehälter 122a vorgesehen.

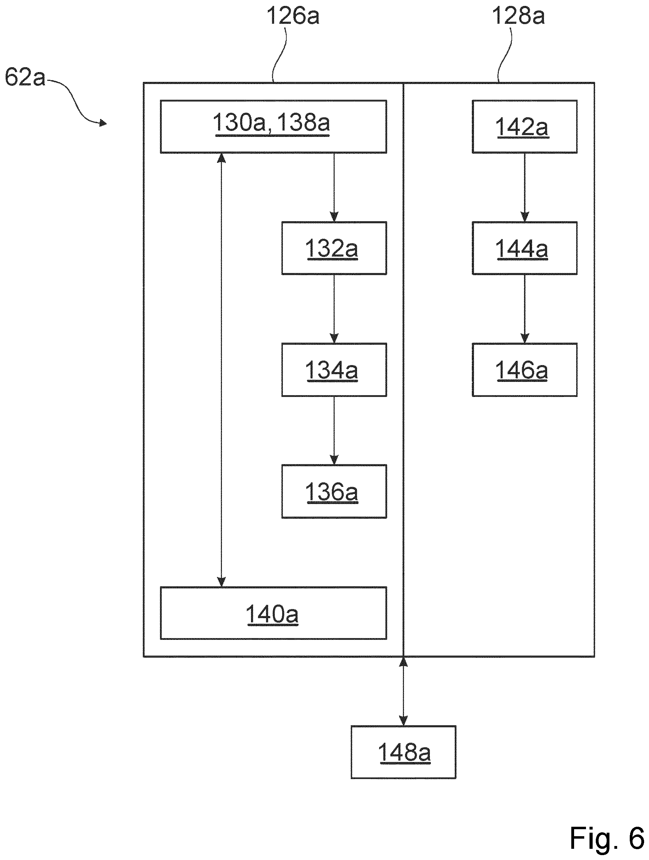

Figur 6 zeigt ein Verfahren 62a zu einem Betrieb der Aufbereitungsvorrichtung 10a und/oder des Aufbereitungssystems 48a. In dem Verfahren 62a wird die Flüssigkeit 28a und das gasförmige Medium 12a durch Drehen der Aufbereitungsvorrichtung 10a vermischt, sodass Partikel und Wärme von dem gasförmigen Medium 12a auf die Flüssigkeit 28a übertragen und mit der Flüssigkeit 12a von der Aufbereitungsvorrichtung 10a weggeführt werden. Das Verfahren 62a umfasst vorzugsweise eine Flüssigkeitshandhabung 126a und eine Gashandhabung 128a, welche insbesondere parallel zueinander ablaufen. Die Flüssigkeitshandhabung 126a umfasst insbesondere einen Flüssigkeitskühlschritt 130a, in welchem das Kühlelement 58a die Flüssigkeit 28a kühlt. Die Flüssigkeitshandhabung 126a umfasst insbesondere einen Flüssigkeitseinspeisungsschritt 132a, in welchem die, insbesondere gekühlte, Flüssigkeit 28a über den Flüssigkeitsanschluss 44a in die Rotationseinheit 14a eingespeist wird. Die Flüssigkeitshandhabung 126a umfasst insbesondere einen Auswurfschritt 134a, in welchem die Flüssigkeit 28a durch eine Drehbewegung der Rotationseinheit 14a aus der Rotationseinheit 14a ausgeworfen wird. Insbesondere wird die Flüssigkeit 28a in dem Auswurfschritt 134a tangential von der Rotationseinheit 14a in Richtung der Auffangflächen 112a weggeschleudert. Die Flüssigkeitshandhabung 126a umfasst insbesondere einen Flüssigkeitssammelschritt 136a. In dem Flüssigkeitssammelschritt 136a läuft die Flüssigkeit 28a aufgrund der Schwerkraft entlang der Auffangflächen 112a über den Flüssigkeitsabfluss 120a aus der Aufbereitungsleitung 54a ab. Insbesondere sammelt der Sammelbehälter 122a in dem Flüssigkeitssammelschritt 136a die Flüssigkeit 28a. Vorzugsweise umfasst die Flüssigkeitshandhabung 126a einen Wärmeverwertungsschritt 138a. Insbesondere wird in dem Wärmeverwertungsschritt 138a von der Flüssigkeit 28a in der Aufbereitungsleitung 54a aufgenommene Wärme an ein externes Kühlmittel übertragen. Vorzugsweise umfasst die Flüssigkeitshandhabung 126a einen Flüssigkeitsentnahmeschritt 140a, in welchem ein Teil der Flüssigkeit 28a von der Entnahmeeinheit 62a entnommen, aufbereitet und insbesondere als technisches Wasser zur Verfügung gestellt wird.

Die Gashandhabung 128a umfasst insbesondere einen Gaseinspeisungsschritt 142a, in welchem das gasförmige Medium 12a über den Gaseinlass 50a in die Aufbereitungsleitung 54a eingelassen wird. Vorzugsweise umfasst die Gashandhabung 128a einen Aufbereitungsschritt 144a, in welchem das gasförmige Medium 12a die Rotationseinheit 14a durchströmt. Insbesondere werden die in dem gasförmigen Medium 12a enthaltenen Partikel teilweise von der Flüssigkeit 28a ausgewaschen und/oder bleiben teilweise an den Rotationselementen 20a, 46a hängen. Insbesondere überträgt das gasförmige Medium 12a Wärme auf die Flüssigkeit 28a und wird dadurch gekühlt. Insbesondere wird das, insbesondere gekühlte und partikelarme, gasförmige Medium 12a' in einem Gasauslassschritt 146a des Verfahrens 62a über den Gasauslass 52a an die Umgebung abgegeben. Vorzugsweise umfasst das Verfahren 62a einen Wartungsschritt 148a. In dem Wartungsschritt 148a wird insbesondere die Aufbereitungsvorrichtung 10a aus der Aufbereitungsleitung 54a entnommen, gereinigt und wiedereingesetzt und/oder durch eine neue Aufbereitungsvorrichtung ersetzt.

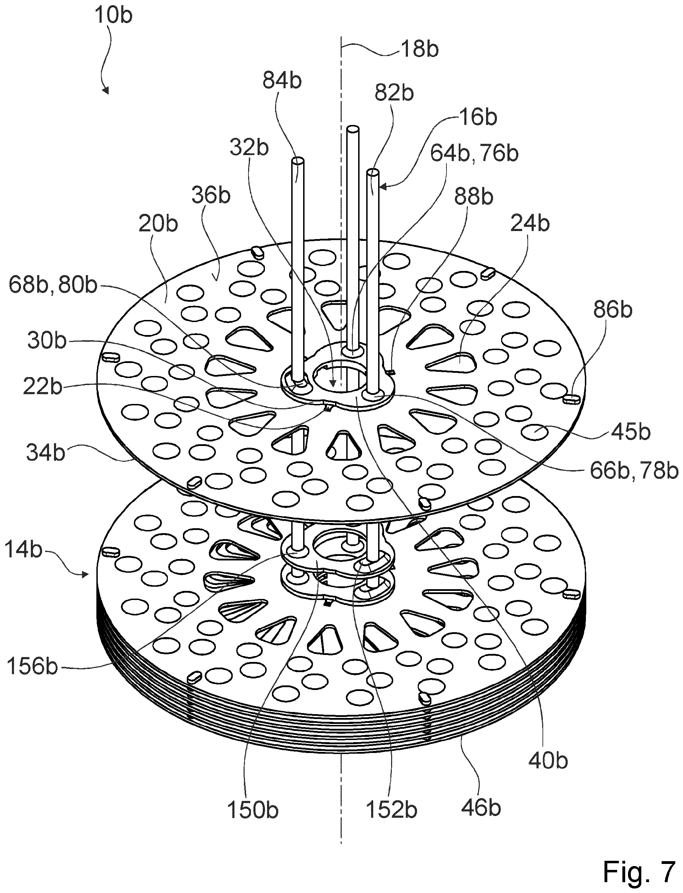

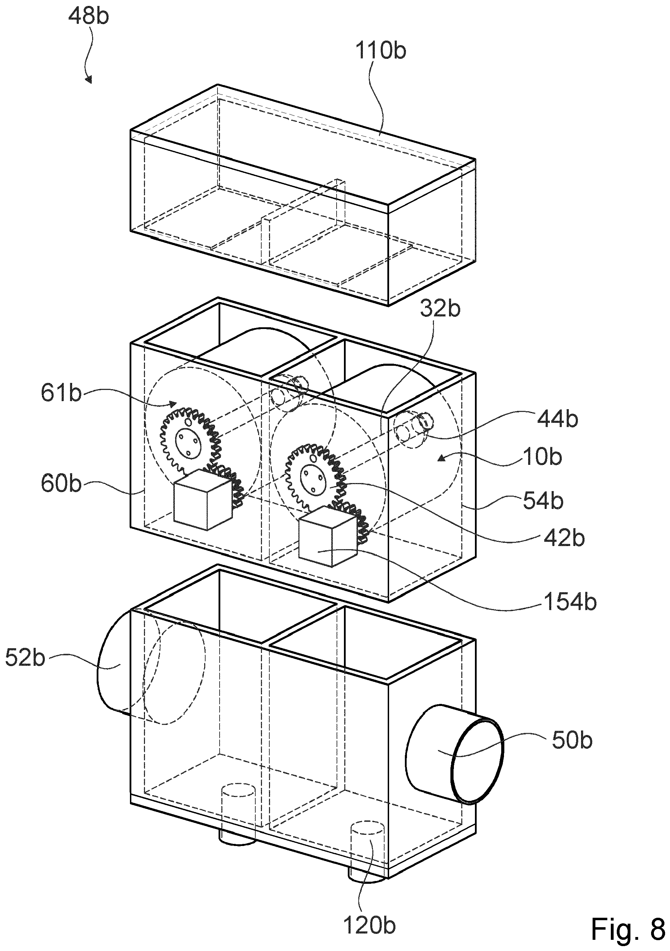

In den Figuren 7 und 8 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In dem Ausführungsbeispiel der Figuren 7 und 8 ist der Buchstabe a durch den Buchstaben b ersetzt.

Figur 7 zeigt eine Rotationseinheit 14b einer Aufbereitungsvorrichtung 10b. Die Aufbereitungsvorrichtung 10b ist zu einem Abscheiden von Partikeln aus einem gasförmigen Medium vorgesehen. Die Aufbereitungsvorrichtung 10b umfasst eine Montageeinheit 16b. Die Montageeinheit 16b ist zu einer um eine Drehachse 18b drehbaren Anordnung der Rotationseinheit 14b innerhalb des gasförmigen Mediums vorgesehen. Die Rotationseinheit 14b umfasst zumindest ein Rotationselement 20b. Das Rotationselement 20b weist einen scheibenförmigen Hauptkörper 34b auf. Der Hauptkörper 34b umfasst zwei zumindest im Wesentlichen parallel verlaufende Hauptaußenflächen 36b. Die Rotationseinheit 14b umfasst einen Flüssigkeitsauslass 22b, 24b. Der Flüssigkeitsauslass 22b, 24b ist zu einem Benetzen einer Oberfläche, insbesondere der Hauptaußenflächen 36b, des Rotationselements 20b mit einer Flüssigkeit vorgesehen. Der Flüssigkeitsauslass 22b, 24b ist an dem Rotationselement 20b angeordnet. Zusätzlich umfasst das Rotationselement 20b zumindest eine Leitungsstruktur 30b. Die Leitungsstruktur 30b bildet einen Teilabschnitt einer Flüssigkeitsleitung 32b der Rotationseinheit 14b zu dem Flüssigkeitsauslass 22b, 24b. Die Flüssigkeitsleitung 32b verläuft zumindest im Wesentlichen parallel zu der Drehachse 18b. Die Aufbereitungsvorrichtung 10b umfasst insbesondere mehrere weitere Rotationselemente 46b, welche mittels Fixierelementen 82b, 84b der Montageeinheit 16b zumindest im Wesentlichen parallel zur Drehachse 18b gestapelt angeordnet sind. Das Rotationselement 20b umfasst zumindest ein Verbindungselement 68b, welches insbesondere als Fixiersteg ausgebildet ist. Das Rotationselement 20b umfasst zumindest ein Verbindungselement 64b, 66b, welches insbesondere als Fixiernoppen ausgebildet ist. Fixieraufnahmen 76b, 78b, 80b des Rotationselements 20b zur Aufnahme der Fixierelemente 82b, 84b sind optional in die Verbindungselemente 64b, 66b, 68b integriert. Insbesondere umgreifen die Verbindungselemente 64b, 66b, 68b das Fixierelement 82b, 84b in einer zur Drehachse 18b senkrechten Ebene. Ein komplementäres weiteres Verbindungselement des Rotationselements 20b zur Aufnahme eines stegförmigen Verbindungselements des weiteren Rotationselements 46b ist vorzugsweise auf einer Geraden parallel zur Drehachse 18b mit einem der noppenförmigen Fixierelemente 64b, 66b angeordnet. Ein komplementäres weiteres Verbindungselement des Rotationselements 20b zur Aufnahme eines der noppenförmigen Verbindungselemente des weiteren Rotationselements 46b ist vorzugsweise auf einer Geraden parallel zur Drehachse 18b mit einem der stegförmigen Fixierelemente 68b angeordnet.

Die Rotationseinheit 14b umfasst zumindest ein Abstandshalterelement 150b. Das Abstandshalterelement 150b ist entlang der Drehachse 18b zwischen dem Rotationselement 20b und einem der weiteren Rotationselemente 46b angeordnet. Das Abstandshalterelement 150b bildet einen Teilabschnitt der Flüssigkeitsleitung 32b. Das Abstandshalterelement 150b nimmt insbesondere die Fixierelemente 82b, 84b auf. Das Abstandshalterelement 150b weist insbesondere Abstandshalterverbindungselemente 152b, 156b auf, welche in Anzahl, Form und relativer Position zueinander den Verbindungselementen 64b, 66b, 68b der Rotationselemente 20b, 46b gleichen. Das Abstandshalterelement 150b weist insbesondere weitere Abstandshalterverbindungselemente auf, welche in Anzahl, Form und relativer Position zueinander den weiteren Verbindungselemente der Rotationselemente 20b, 46b gleichen und welche insbesondere auf einer hier nicht dargestellten von den Abstandshalterverbindungselemente 152b, 156b abgewandten Seite des Abstandshalterelements 150b angeordnet sind. Vorzugsweise sind das stegförmige Abstandshalterverbindungselement 152b und ein stegförmiges weitere Abstandshalterverbindungselement entlang einer Geraden parallel zur Drehachse angeordnet. Vorzugsweise sind je ein noppenförmiges Abstandshalterverbindungselement 156b und ein noppenförmiges weiteres Abstandshalterverbindungselement entlang einer Geraden parallel zur Drehachse angeordnet. Insbesondere verlängert das Abstandshalterelement 150b bei einer Anordnung auf eine Kanalwand einer Kanalstruktur des weiteren Rotationselements 46b diese Kanalwand, insbesondere unter Beibehaltung der auf der Kanalwand angeordneten Strukturen des weiteren Rotationselements 46b.

Figur 8 zeigt eine Explosionsdarstellung eines Aufbereitungssystems 48b. Das Aufbereitungssystem 48b ist insbesondere modular aufgebaut. Das Aufbereitungssystem 48b umfasst insbesondere ein Aufbereitungsmodul zur Realisierung der Aufbereitungsleitung 54b, in welcher die Aufbereitungsvorrichtung 10b drehbar gelagert ist. Insbesondere umfasst das Aufbereitungssystem 48b ein zusätzliches Aufbereitungsmodul zur Realisierung der zusätzliche Aufbereitungsleitung 60b, in welcher eine zusätzliche Aufbereitungsvorrichtung 61b des Aufbereitungssystems 48b drehbar gelagert ist. Das Aufbereitungssystem 48b umfasst insbesondere eine, vorzugsweise pro Aufbereitungsmodul eine, Motoreinheit 154b zu einem Antrieb der Aufbereitungsvorrichtung 10b. Das Aufbereitungsmodul und das weitere Aufbereitungsmodul können separat ausgebildet sein oder ein gemeinsames Gehäuse aufweisen. Insbesondere umfasst das Aufbereitungssystem 48b zumindest eine als Modul ausgebildete Umlenkleitung 110b, welche die Aufbereitungsleitung 54b und die zusätzliche Aufbereitungsleitung 61b fluidtechnisch verbindet. Insbesondere umfasst das Aufbereitungssystem 48b ein Gaseinlassmodul, in welchem ein Gaseinlass 50b und ein Flüssigkeitsabfluss 120b des Aufbereitungssystems 48b angeordnet ist. Das Aufbereitungssystem 48b umfasst insbesondere ein Gasauslassmodul, in welchem ein Gasauslass 52b und ein weiterer Flüssigkeitsabfluss des Aufbereitungssystems 48b angeordnet ist. Das Gaseinlassmodul und das Gasauslassmodul können separat ausgebildet sein oder ein gemeinsames Gehäuse aufweisen. Insbesondere kann das Aufbereitungssystem 48b eine beliebige Anzahl an Aufbereitungsmodulen, zusätzlichen Aufbereitungsmodulen und Umlenkleitungen aufweisen, welche bezogen auf das gasförmige Medium in Reihe oder parallel geschaltet werden, um das Aufbereitungssystem 48b in Abhängigkeit von Parametern des gasförmigen Mediums anzupassen, insbesondere Temperatur, Volumenstrom, Partikelgehalt, pH-Wert oder dergleichen.

## Patentansprüche

1. Aufbereitungsvorrichtung zu einem Abscheiden von Partikeln aus einem gasförmigen Medium (12a), mit zumindest einer Rotationseinheit (14a; 14b) und mit zumindest einer Montageeinheit (16a; 16b) zu einer um eine Drehachse (18a; 18b) drehbaren Anordnung der Rotationseinheit (14a; 14b) innerhalb des gasförmigen Mediums (12a), wobei die Rotationseinheit (14a; 14b) zumindest ein Rotationselement (20a; 20b) und einen Flüssigkeitsauslass (22a, 24a, 26a; 22b; 24b) zu einem Benetzen einer Oberfläche des Rotationselements (20a; 20b) mit einer Flüssigkeit (28a) umfasst, **dadurch gekennzeichnet, dass** der Flüssigkeitsauslass (22a, 24a, 26a; 22b, 24b) an dem Rotationselement (20a; 20b) angeordnet ist und/oder das Rotationselement (20a; 20b) zumindest eine Leitungsstruktur (30a; 30b) umfasst, welche zumindest einen Teilabschnitt einer Flüssigkeitsleitung (32a; 32b) zu dem Flüssigkeitsauslass (22a, 24a, 26a; 22b; 24b; 26b) bildet, die zumindest im Wesentlichen parallel zu der Drehachse (18a; 18b) verläuft.

2. Aufbereitungsvorrichtung nach Anspruch 1, **dadurch gekennzeichnet, dass** das Rotationselement (20a; 20b) einen scheibenförmigen Hauptkörper (34a; 34b) mit zwei zumindest im Wesentlichen parallel verlaufenden Hauptaußenflächen (36a, 38a; 36b) umfasst, wobei der Flüssigkeitsauslass (22a, 24a, 26a; 22b, 24b) in zumindest einer der Hauptaußenflächen (36a, 38a; 36b) mündet.

3. Aufbereitungsvorrichtung nach Anspruch 1 oder 2, **dadurch gekennzeichnet, dass** das Rotationselement (20a; 20b) aus einem Kunststoff gefertigt ist.

4. Aufbereitungsvorrichtung nach einem der vorhergehenden Ansprüche, **dadurch gekennzeichnet, dass** eine Leitungswand (40a; 40b) der Leitungsstruktur (30a; 30b) eine Antriebswelle zu einem Antrieb der Rotationseinheit (14a; 14b) aufnimmt und/oder bildet.

5. Aufbereitungsvorrichtung nach einem der vorhergehenden Ansprüche, **dadurch gekennzeichnet, dass** die Montageeinheit (16a; 16b) ein mit dem Rotationselement (20a; 20b) drehfest verbundenes Getriebeelement (42a; 42b) zu einem Antrieb der Rotationseinheit (14a; 14b) umfasst, wobei das Getriebeelement (42a; 42b) und ein den Flüssigkeitsauslass (22a, 24a, 26a; 22b, 24b) versorgender Flüssigkeitsanschluss (44a; 44b) entlang der Drehachse (18a; 18b) auf verschiedenen Seiten der Rotationseinheit (14a; 14b) angeordnet sind.

6. Aufbereitungsvorrichtung nach einem der vorhergehenden Ansprüche, **dadurch gekennzeichnet, dass** das Rotationselement (20a; 20b) Umlenkelemente (45a; 45b) zu einer Verteilung der Flüssigkeit (28a) aufweist, welche beidseitig an einem scheibenförmigen Hauptkörper (34a; 34b) des Rotationselements (20a; 20b) angeordnet sind.

7. Aufbereitungsvorrichtung nach einem der vorhergehenden Ansprüche, **dadurch gekennzeichnet, dass** die Rotationseinheit (14a; 14b) zumindest ein, insbesondere baugleiches, weiteres Rotationselement (46a; 46b) aufweist, welches entlang der Drehachse (18a; 18b) mit dem Rotationselement (20a; 20b) aneinander gestapelt angeordnet ist.

8. Aufbereitungsvorrichtung nach Anspruch 7, **dadurch gekennzeichnet, dass** die Rotationseinheit (14b) zumindest ein Abstandshalterelement (150b) umfasst, welches entlang der Drehachse (18b) zwischen dem Rotationselement (20b) und dem weiteren Rotationselement (46b) angeordnet ist und einen Teilabschnitt der Flüssigkeitsleitung (32b) bildet.

9. Aufbereitungssystem zu einem Abscheiden von Partikeln aus einem gasförmigen Medium (12a) mit zumindest einer Aufbereitungsvorrichtung nach einem der vorhergehenden Ansprüche, mit zumindest einem Gaseinlass (50a; 50b) für das mit den Partikeln versetzte gasförmige Medium (12a), mit zumindest einem Gasauslass (52a; 52b) für das gasförmige Medium (12a') in einem aufbereiteten Zustand, mit zumindest einer Aufbereitungsleitung (54a; 54b), welche den Gaseinlass (50a; 50b) mit dem Gasauslass (52a; 52b) strömungstechnisch verbindet, wobei die Aufbereitungsvorrichtung im Inneren der Aufbereitungsleitung (54a; 54b) drehbar gelagert ist.

10. Aufbereitungssystem nach Anspruch 9, **dadurch gekennzeichnet, dass** eine maximale Erstreckung der Aufbereitungsleitung (54a; 54b) in einem zu einer Drehebene der Rotationseinheit (14a; 14b) senkrechten Querschnitt unwesentlich größer als eine maximale Erstreckung der Rotationseinheit (14a; 14b) in dieser Richtung ist, sodass zumindest eine Teilmenge der von der Aufbereitungsvorrichtung ausgeworfenen Flüssigkeit an einer Innenwandung der Aufbereitungsleitung (54a; 54b) abfließt.

11. Aufbereitungssystem nach Anspruch 9 oder 10, **gekennzeichnet durch** einen an der Aufbereitungsleitung (54a; 54b) angeordneten Siphon (56a) zu einem Auslass der von der Aufbereitungsvorrichtung ausgeworfenen Flüssigkeit (28a) aus der Aufbereitungsleitung (54a; 54b).

12. Aufbereitungssystem nach einem der Ansprüche 9 bis 11, **gekennzeichnet durch** zumindest ein Kühlelement (58a) zu einer Senkung einer Temperatur der Flüssigkeit (28a), welches stromaufwärts des Flüssigkeitsauslasses (22a, 24a, 26a; 22b, 24b) angeordnet ist.

13. Aufbereitungssystem nach einem der Ansprüche 9 bis 12, **dadurch gekennzeichnet, dass** der Gaseinlass (50a; 50b) in einem Flüssigkeitsauswurfbereich der Aufbereitungsvorrichtung angeordnet ist.

14. Aufbereitungssystem nach einem der Ansprüche 9 bis 13, **gekennzeichnet durch** eine an der Aufbereitungsleitung (54a; 54b) angeschlossene zusätzliche Aufbereitungsleitung (60a; 60b) mit einer zusätzlichen Aufbereitungsvorrichtung (62a; 62b), wobei eine Flüssigkeitsversorgung der Aufbereitungsleitung (54a) fluidtechnisch getrennt von einer Flüssigkeitsversorgung der zusätzlichen Aufbereitungsleitung (60a; 60b) ausgebildet ist.

15. Aufbereitungssystem nach einem der Ansprüche 9 bis 14, **gekennzeichnet durch** eine Entnahmeeinheit (63a) zu einer Entnahme von aus dem gasförmigen Medium (12a) gewonnenem Kondensat aus der Aufbereitungsleitung (54a; 54b).

16. Verfahren zum Betrieb einer Aufbereitungsvorrichtung nach einem der Ansprüche 1 bis 8 und/oder eines Aufbereitungssystems nach einem der Ansprüche 9 bis 15.

17. Verfahren nach Anspruch 16, **dadurch gekennzeichnet, dass** die Flüssigkeit und das gasförmige Medium durch Drehen der Aufbereitungsvorrichtung vermischt werden, so dass Partikel und Wärme von dem gasförmigen Medium (12a) auf die Flüssigkeit (28a) übertragen und mit der Flüssigkeit (28a) von der Aufbereitungsvorrichtung weggeführt werden.
